# EUROPEAN PATENT APPLICATION

(11) **EP 4 546 818 A1**
(43) Date of publication of application: **30.04.2025**
(21) Application number: 24732150.8
(22) Date of filing: 12.06.2024
(51) Int. Cl.: H04R 3/12, H04M 1/03, H04M 1/02

(54) **ELECTRONIC DEVICE AND METHOD FOR CONTROLLING ONE OR MORE SPEAKERS**

(30) Priority: 16.09.2023 KR 20230123574; 24.10.2023 KR 20230143358
(71) Applicant: Samsung Electronics Co., Ltd., Suwon-si, Gyeonggi-do 16677 (KR)
(72) Inventor: PARK, Youngbae, Suwon-si Gyeonggi-do 16677 (KR); LEE, Myungcheol, Suwon-si Gyeonggi-do 16677 (KR); KIM, Seungnam, Suwon-si Gyeonggi-do 16677 (KR); PARK, Choonghyo, Suwon-si Gyeonggi-do 16677 (KR); BAE, Sumin, Suwon-si Gyeonggi-do 16677 (KR); YOON, Gunhyuk, Suwon-si Gyeonggi-do 16677 (KR); KIM, Kiwon, Suwon-si Gyeonggi-do 16677 (KR); KIM, Taeeon, Suwon-si Gyeonggi-do 16677 (KR); PARK, Taeyoung, Suwon-si Gyeonggi-do 16677 (KR); SIM, Myoungsung, Suwon-si Gyeonggi-do 16677 (KR); CHO, Joonrae, Suwon-si Gyeonggi-do 16677 (KR)
(74) Representative: HGF
(86) International application number: PCT/KR2024/008097
(87) International publication number: WO 2025/058172

(57) **Abstract**

An electronic device includes a first speaker for outputting a first audio signal, a second speaker for outputting a second audio signal, and a processor. The processor is configured to, in case that the electronic device is in a first state in which a distance between the first speaker and the second speaker is less than a designated distance, output, through the first speaker, the first audio signal and output, through the second speaker, the second audio signal to have a phase distinct from a phase of the first audio signal. The processor is configured to, in case that the electronic device is in a second state in which the distance between the first speaker and the second speaker is greater than or equal to the designated distance, output, through the first speaker, the first audio signal and output, through the second speaker, the second audio signal to have a phase corresponding to the phase of the first audio signal.

## Description

### [Technical Field]

The following descriptions relate to an electronic device and a method for controlling one or more speakers.

### [Background Art]

The shapes and/or sizes of electronic devices are diversifying. In order to enhance mobility, an electronic device with reduced size and/or reduced volume are being designed. Various states may be provided as positions of housings of the electronic device are changed. That is, electronic devices are increasingly being designed to be more compact for enhanced portability.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may comprise a first speaker for outputting a first audio signal, a second speaker for outputting a second audio signal, a processor operably coupled with the first speaker and the second speaker. The processor may be configured to, in case that the electronic device is in a first state in which a distance between the first speaker and the second speaker is less than a designated distance, output, through the first speaker, the first audio signal and output, through the second speaker, the second audio signal to have a phase distinct from a phase of the first audio signal. The processor may be configured to, in case that the electronic device is in a second state in which the distance between the first speaker and the second speaker is greater than or equal to the designated distance, output, through the first speaker, the first audio signal and output, through the second speaker, the second audio signal to have a phase corresponding to the phase of the first audio signal.

According to an embodiment, a method performed by an electronic device may comprise, in case that the electronic device is in a first state in which a distance between a first speaker and a second speaker is less than a designated distance, outputting, through the first speaker, the first audio signal and outputting, through the second speaker, the second audio signal to have a phase distinct from a phase of the first audio signal. The method may comprise, in case that the electronic device is in a second state in which the distance between the first speaker and the second speaker is greater than or equal to the designated distance, outputting, through the first speaker, the first audio signal and outputting, through the second speaker, the second audio signal to have a phase corresponding to the phase of the first audio signal.

According to an embodiment, a sound performance can be improved by outputting the first and second audio signals from the first and second speakers according to a distance between or separating the speakers.

According to an embodiment, outputting a second audio signal having a phase corresponding to that of the first audio signal when the first and second speakers are separated by a distance above or at a threshold distance produces a stereo performance effect. When a phase of the second signal is said to correspond to the phase of the first signal, this may mean that the phases of the first and second signals are the same.

According to an embodiment, outputting a second audio signal having a phase distinct from that of the first audio signal when the first and second speakers are separated by a distance of less than the threshold distance reduces sound leakage from a rear of the electronic device. When a phase of the second signal is said to be distinct from the phase of the first signal, this may mean that the phases of the first and second signals are opposites.

### [Description of the Drawings]

FIG. 1 is a block diagram of an electronic device in a network environment, according to an embodiment.
FIG. 2 is a simplified block diagram of an electronic device, according to an embodiment.
FIG. 3A illustrates an example of an opening of a housing for emitting an audio signal.
FIG. 3B illustrates an example of a cross-sectional view for describing a duct to which an audio signal is outputted.
FIG. 4 is a flowchart illustrating an operation of an electronic device, according to an embodiment.
FIG. 5 illustrates an example of an electronic device including one or more speakers according to an embodiment.
FIG. 6 illustrates an example of an electronic device including one or more speakers according to an embodiment.
FIG. 7 illustrates an example of an electronic device including one or more speakers according to an embodiment.
FIGS. 8A and 8B illustrate an example of an electronic device including one or more speakers according to an embodiment.
FIG. 9 illustrates an example of an electronic device including one or more speakers according to an embodiment.
FIGS. 10A and 10B illustrate an example of an electronic device including one or more speakers according to an embodiment.
FIG. 11 illustrates an example of an electronic device including one or more speakers according to an embodiment.

### [Mode for Invention]

Hereinafter, embodiments of the present disclosure will be described in detail with reference to drawings so that those having ordinary knowledge in the art to which the present disclosure belongs may easily implement it. However, the present disclosure may be implemented in various different forms and is not limited to the embodiments described herein. In relation to the description of the drawings, identical or similar reference numerals may be used for identical or similar components. In addition, in the drawings and related descriptions, descriptions of well-known features and configurations may be omitted for clarity and brevity.

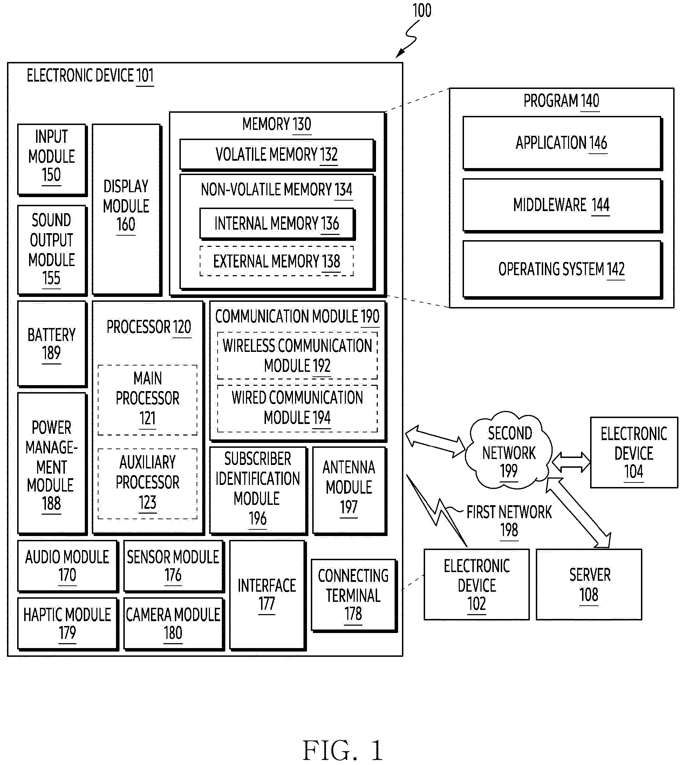

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following specification, an electronic device (e.g., the electronic device 101 of FIG. 1) including one or more speakers will be described. A state of the electronic device may be changed according to a change in location of housings (or housing parts) of the electronic device. The electronic device may output an audio signal using the one or more speakers through an opening (or a hole) configured in the housing of the electronic device. While a designated application (e.g., a phone application) is being executed in the electronic device, an audio signal (e.g., a voice signal) may be emitted to the outside through the one or more speakers. Since the audio signal is emitted non-directionally, the audio signal may be emitted not only in a direction toward a user (or the user's ear), but also in other direction different from the direction. An audio signal emitted in the other direction different from the direction may cause inconvenience of the user. Therefore, in the following specification, a technical feature for reducing a size of the audio signal emitted in the other direction will be described.

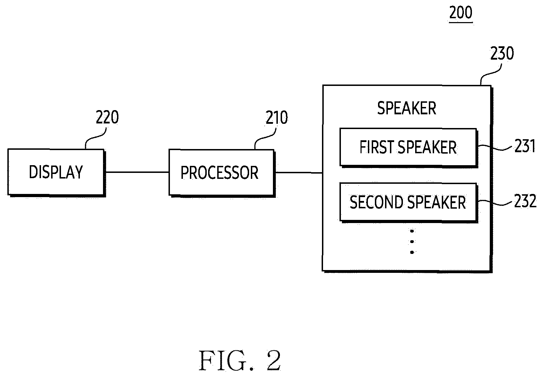

FIG. 2 is a simplified block diagram of an electronic device, according to an embodiment.

Referring to FIG. 2, an electronic device 200 may include a processor 210, a display 220, and/or a speaker 230. According to an embodiment, the electronic device 200 may include at least one of the processor 210, the display 220, and the speaker 230. For example, at least a portion of the processor 210, the display 220, and the speaker 230 may be omitted according to an embodiment. For example, the electronic device 200 may include at least a portion of the components of the electronic device 101 of FIG. 1. Although not illustrated, the electronic device 200 may include various components in addition to the processor 210, the display 220, and the speaker 230.

According to an embodiment, the processor 210 may correspond to the processor 120 of FIG. 1. The processor 210 may be operably coupled with, or connected with the display 220 and the speaker 230. The processor 210 being operably coupled with, or connected with the display 220 and the speaker 230 may mean that the processor 210 may control the display 220 and the speaker 230. For example, the display 220 and the speaker 230 may be controlled by the processor 210.

Although illustrated based on different blocks, the embodiment is not limited thereto, and a portion (e.g., at least a portion of the processor 210, the display 220, and the speaker 230) of the hardware of FIG. 2 may be included in a single integrated circuit (SoC), such as a system on chip (SoC).

According to an embodiment, the processor 210 may include at least one processor. For example, the processor 210 may include a main processor that performs high-performance processing and an auxiliary processor that performs low-power processing.

According to an embodiment, the processor 210 may include a hardware component for processing data based on one or more instructions. For example, the hardware components for processing data may include an arithmetic and logic unit (ALU), a field programmable gate array (FPGA), and/or a central processing unit (CPU).

For example, the processor 210 may include an application processor, a supplementary processor (e.g., a sensor hub, a microcontroller unit (MCU)), a central processor unit (CPU), a neural processing unit (NPU), and a graphic processing unit (GPU), and/or a processor for IoT (e.g., a processor integrated with a communication module).

According to an embodiment, the electronic device 200 may include the display 220. For example, the display 220 may correspond to the display module 160 of FIG. 1. For example, the display 220 may be deformed by the external force applied to the display 220. The display 220 may be referred to as a flexible display. A specific example of the display 220 disposed in the electronic device 200 will be described based on form factors of the electronic device 200 to be described later.

For example, the display 220 of the electronic device 200 may output visualized information to the user. The display 220 may include a liquid crystal display (LCD), a plasma display panel (PDP), one or more light emitting diodes (LEDs), and/or one or more organic light emitting diodes (OLEDs). According to an embodiment, the display 220 may include a sensor (e.g., a touch sensor panel (TSP)) for detecting an external object (e.g., a user's finger) on the display 220.

According to an embodiment, the electronic device 200 may include the speaker 230. The speaker 230 of the electronic device 200 may be configured to output an audio signal provided from the processor 210. Signal paths electrically connecting the processor 210 and the speaker 230 may include at least one switch (e.g., a transistor) and/or an amplifier controlled by the processor 210. The processor 210 may change volume and/or frequency of the speaker 230 using a switch and/or an amplifier on a signal path. The processor 210 may activate or deactivate the speaker 230, by changing the voltage and/or current of a power signal provided to the speaker 230.

For example, the speaker 230 may include one or more speakers. Electrical paths electrically connecting the processor 210 and each of the one or more speakers may be formed. The electrical paths may be implemented independently. The processor 210 may individually control the one or more speakers, based on the electrical paths implemented independently.

For example, the speaker 230 may include a first speaker 231 and/or a second speaker 232. A state of the electronic device 200 may be identified based on a distance between the first speaker 231 and the second speaker 232.

For example, the first speaker 231 may be disposed on a first housing of the electronic device 200. The second speaker 232 may be disposed on a second housing of the electronic device 200. The distance between the first speaker 231 and the second speaker 232 may be changed according to a change in location of the first housing and the second housing. For example, the first and second housings may be rotatably coupled using a hinge disposed between the two housings. As the angle between the two housings changes, so may a distance between the speakers disposed in each of the two housings. As another example, the first and second housings may be slidably coupled such that the housings may undergo a relative translational movement. As one or both of the housings undergoes a translational or sliding movement, a distance between the speakers disposed in the two housings may change.

For example, the state of the electronic device 200 may be identified as a first state, based on the distance between the first speaker 231 and the second speaker 232 being less than a designated distance. For example, the state of the electronic device 200 may be identified as a second state based on the distance between the first speaker 231 and the second speaker 232 being greater than or equal to the designated distance.

According to an embodiment, the arrangement of the first speaker 231 and the second speaker 232 may be changed in a housing (e.g., the first housing or the second housing) of the electronic device 200. In the following specification, an example of the arrangement of a speaker 230 (e.g., the first speakers 231 and the second speakers 232) according to various shapes (e.g., form factors) of the electronic devices 200 will be described. In a state in which the first speaker 231 and the second speaker 232 are disposed according to various shapes of the electronic device 200, the processor 210 may change an audio signal outputted from the first speaker 231 and the second speaker 232, based on the state of the electronic device 200.

For example, the first speaker 231 may perform a function of a speaker and a function of a receiver. The second speaker 232 may perform only a function of a speaker. When the first speaker 231 capable of performing the function of a speaker and the function of a receiver is disposed in a housing of the electronic device 200, an opening (or a hole) of the housing for emitting a first audio signal outputted through the first speaker 231 may be implemented as two (or in two directions). When the second speaker 232 capable of performing only the function of a speaker is disposed in the housing of the electronic device 200, an opening (or a hole) of the housing for emitting a second audio signal outputted through the second speaker 232 may be implemented as one.

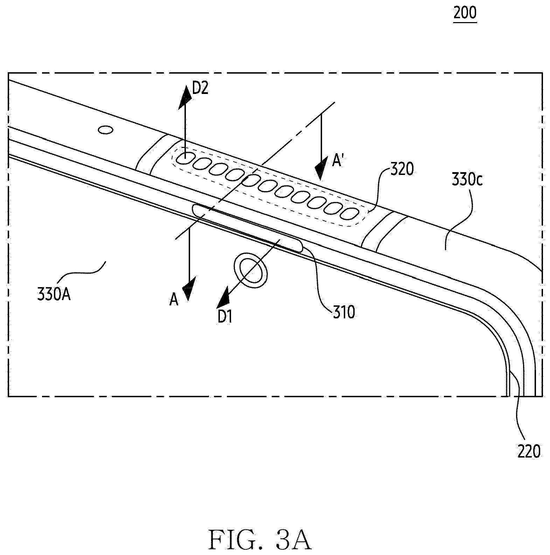

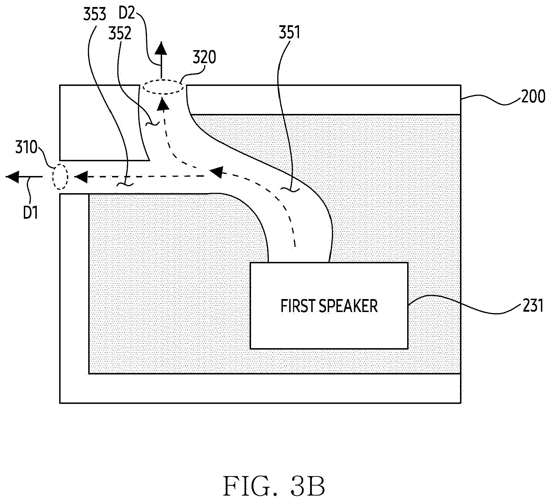

An example of a structure in which the opening (or hole) of the housing for emitting an audio signal is implemented as two (or in two directions) will be described with reference to FIGS. 3A and 3B.

Although not illustrated in FIG. 2, the electronic device 200 may further include various components. For example, the electronic device 200 may further include a sensor. For example, the sensor may be used to identify a location relationship of housings of the electronic device 200. As an example, a sensor (e.g., a hall sensor) may be used to identify an angle between the housings. The processor 210 may use a sensor to identify a location relationship (e.g., an angle between housings), and may identify a distance between the first speaker 231 and the second speaker 232 based on the identified location relationship.

FIG. 3A illustrates an example of an opening of a housing for emitting an audio signal.

FIG. 3B illustrates an example of a cross-sectional view for describing a duct to which an audio signal is outputted. FIG. 3B is a cross-sectional view cut along line A-A' of FIG. 3A.

Referring to FIG. 3A, an electronic device 200 may correspond to the electronic device 200 of FIG. 2. The electronic device 200 may include an opening 310 formed on a front surface 330A and an opening 320 formed on a side surface 330C. A housing of the electronic device 200 may include the opening 310 formed on the front surface 330A of the electronic device 200 and the opening 320 formed on the side surface 330C of the electronic device 200.

For example, the opening 310 may be formed to emit an audio signal outputted (or generated) through a speaker 230 in a direction D1. The opening 320 may be formed to emit the audio signal outputted (or generated) through the speaker 230 in a direction D2. For example, the opening 310 may be formed as a single hole. For example, the opening 320 may be formed of a plurality of holes. However, it is not limited thereto. For example, the opening 310 may be formed of a plurality of holes. For example, the opening 320 may be formed of a single hole.

For example, an audio signal may be outputted in the direction D1 (or the front surface 330A) toward which the display 220 faces through the opening 310, and the audio signal may be outputted in the second direction D2 (or the side surface 330C) through the opening 320. For example, the direction D2 may be substantially perpendicular to the direction D1. The direction D2 may be substantially parallel to the front surface 330A perpendicular to the direction D1, but is not limited thereto.

Referring to FIG. 3B, the electronic device 200 may include at least one duct for transmitting an audio signal outputted from a first speaker 231 capable of performing a function of a speaker and a function of a receiver to the outside. For example, the electronic device 200 may include a first duct 351, a second duct 352, and a third duct 353. The first duct 351 may be directly connected to the first speaker 231. The second duct 352 may extend from the first duct 351 to the opening 320. The third duct 353 may extend from the first duct 351 to the opening 310.

The first audio signal outputted through the first speaker 231 may be emitted to the second duct 352 and the third duct 353 through the first duct 351. A portion of the first audio signal may be emitted from the opening 320 through the second duct 352. A portion of the first audio signal emitted from the opening 320 may be emitted in the direction D2. A remaining portion of the first audio signal may be emitted from the opening 310 through the third duct 353. The remaining portion of the first audio signal emitted from the opening 310 may be emitted in the direction D1.

Although not illustrated, an opening for a second speaker 232 capable of performing a function of a speaker may be formed as one. In FIG. 3B, when the second speaker 232 is disposed in the housing of the electronic device 200, the opening 310 may not be formed. The second audio signal outputted through the second speaker 232 may be emitted only through the opening 320. The second audio signal emitted from the opening 320 may be emitted in the direction D2.

As described above, the first audio signal outputted through the first speaker 231 may be emitted in the directions D1 and D2. A first audio signal (or a portion of the first audio signal) emitted in the direction D2 according to a function of an application may be treated as a leakage sound. For example, when a phone application is executed on the electronic device 200 and a user calls another user using the electronic device 200, the user may hear a first audio signal (or another portion of the first audio signal) emitted in the direction D1 through the opening 310. The first audio signal (or the portion of the first audio signal) emitted in the direction D2 through the opening 320 may be treated as a leakage sound. Accordingly, the electronic device 200 may perform an operation for reducing a size of the first audio signal (or the portion of the first audio signal) emitted in the direction D2 through the opening 320.

For example, while a distance between the first speaker 231 and the second speaker 232 is less than a designated distance, the second audio signal outputted through the second speaker 232 may be emitted in the direction D2. The processor 210 may reduce the size of the first audio signal (or the portion of the first audio signal) emitted in the direction D2 through the first speaker 231, by outputting, from the second speaker 232, a second audio signal having a phase (e.g., an opposite phase) distinct from a phase of the first audio signal outputted from the first speaker 231.

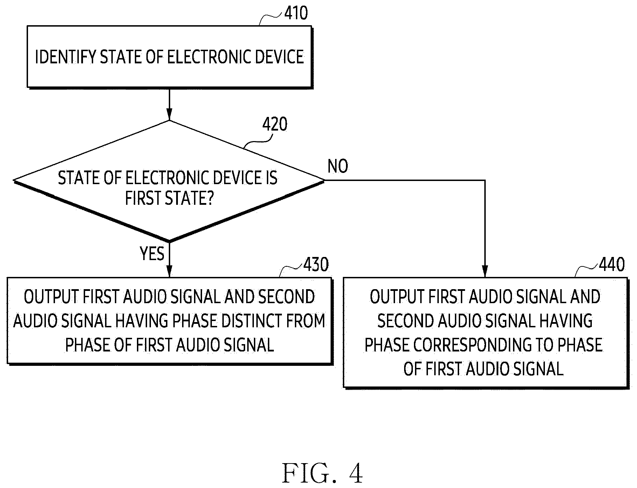

FIG. 4 is a flowchart illustrating an operation of an electronic device, according to an embodiment. In the following embodiment, each operation may be performed sequentially, but is not necessarily performed sequentially. For example, the sequence of each operation may be changed, and at least two operations may be performed in parallel.

In operation 410, a processor 210 may identify a state of an electronic device 200. The processor 210 may identify the state of the electronic device 200 as one of a first state and a second state.

For example, the first state may include or be a state in which a distance between a first speaker 231 and a second speaker 232 is less than a designated distance. The second state may include or be a state in which the distance between the first speaker 231 and the second speaker 232 is greater than or equal to the designated distance.

For example, the first state may include or be a state in which the distance between the first speaker 231 and the second speaker 232 is within the designated distance. The second state may include or be a state in which the distance between the first speaker 231 and the second speaker 232 is outside the designated distance.

For example, the first state may include or be a state in which the distance between the first speaker 231 and the second speaker 232 is the shortest among states of the electronic device 200. While the state of the electronic device 200 is in the first state, the distance between the first speaker 231 and the second speaker 232 may be the shortest. That is, the first state may be the state in which a distance between the first speaker 231 and the second speaker 232 is a minimum distance from among the range of possible distances possible with the electronic device 200. For example, where the electronic device 200 is a foldable electronic device, the minimum distance between the first speaker 231 and second speaker 232 may occur when the foldable electronic device is in a fully folded state. The second state may include or be a state in which the distance between the first speaker 231 and the second speaker 232 is the farthest among states of the electronic device 200. While the state of the electronic device 200 is in the second state, the distance between the first speaker 231 and the second speaker 232 may be the longest. That is, the second state may be the state in which a distance between the first speaker 231 and the second speaker 232 is a maximum distance from among the range of possible distances possible with the electronic device 200. For example, where the electronic device 200 is a foldable electronic device, the maximum distance between the first speaker 231 and second speaker 232 may occur when the foldable electronic device is in a fully unfolded state.

For example, the first state may include or be a state in which the distance between the first speaker 231 and the second speaker 232 is the shortest among states of the electronic device 200. While the state of the electronic device 200 is in the first state, the distance between the first speaker 231 and the second speaker 232 may be the shortest. The second state may include a state other than the first state among states of the electronic device 200. That is, the second state may be a state in which the distance between the first speaker 231 and second speaker 232 is not a minimum distance from among the range of distances possible with the electronic device 200.

According to an embodiment, the first speaker 231 may perform both a function of a speaker and a function of a receiver. The second speaker 232 may perform only the function of a speaker.

For example, when the first speaker 231 is disposed in a housing of the electronic device 200, an opening (or a hole) of the housing for emitting a first audio signal outputted through the first speaker 231 may be formed as two (or in two directions). When the second speaker 232 capable of performing only the function of the speaker is disposed in the housing of the electronic device 200, an opening (or a hole) of the housing for emitting a second audio signal outputted through the second speaker 232 may be formed as one.

For example, the first speaker 231 may be disposed to emit the first audio signal through a first opening and a third opening. The second speaker 232 may be disposed to emit the second audio signal through a second opening. Each of the first opening, second opening and third opening may be different openings.

As an example, the first speaker 231 may be disposed in a first housing to emit the first audio signal in a first direction through the first opening. The first speaker 231 may be disposed to emit the first audio signal in a second direction through the third opening. The second direction may be different to the first direction due to the different positions of the first and third openings. The first audio signal (or a portion of the first audio signal) may be emitted in the first direction through the first opening. The first audio signal (or a remaining portion of the first audio signal) may be emitted in the second direction distinct from (or different to) the first direction through the third opening. The second direction may be substantially perpendicular to the first direction. For example, the second speaker 232 may be disposed in a second housing to emit the second audio signal in the first direction through the second opening.

In operation 420, the processor 210 may identify whether the state of the electronic device 200 is the first state. For example, the processor 210 may identify whether the state of the electronic device 200 is the first state based on identifying whether the distance between the first speaker 231 and the second speaker 232 is less than the designated or predetermined distance.

According to an embodiment, the processor 210 may also identify whether the electronic device 200 is in the second state. For example, the processor 210 may identify whether the state of the electronic device 200 is the second state based on identifying whether the distance between the first speaker 231 and the second speaker 232 is greater than or equal to the designated or predetermined distance. According to an embodiment, the processor 210 may determine the state of the electronic device 200 based on a location relationship between housings of the electronic device 200. The location relationship between the first and second housings of the electronic device may be indicative of a distance between the first speaker 231 and second speaker 232.

In operation 430, when the state of the electronic device 200 is the first state, the processor 210 may output the first audio signal and the second audio signal having a phase distinct from (that is, different to, or opposite to) a phase of the first audio signal. Based on identifying the state of the electronic device 200 as the first state, the processor 210 may output the first audio signal and the second audio signal having the phase distinct from the phase of the first audio signal. For example, the first audio signal and the second audio signal may be generated based on the same sound source.

According to an embodiment, the first audio signal outputted by the first speaker 231 may be emitted through the first opening and the third opening. A portion of the first audio signal may be emitted through the first opening in the first direction. A remaining portion of the first audio signal may be emitted through the third opening in the second direction. The second audio signal outputted by the second speaker 232 may be emitted through the second opening. The second audio signal may be emitted through the second opening in the first direction.

For example, the phase of the second audio signal may be opposite to the phase of the first audio signal. The second audio signal may have a phase corresponding to the phase opposite to the phase of the first audio signal. The phase of the second audio signal being opposite to the phase of the first audio signal may mean that the phase of the second audio signal is substantially opposite to the phase of the first audio signal. As an example, a first phase of the first audio signal may be substantially opposite to a second phase of the second audio signal. For example, that a phase corresponds to the phase opposite to the phase of the first audio signal may mean that the phase is substantially the same as the phase opposite to the phase of the first audio signal.

When the phase of the second audio signal is opposite to the phase of the first audio signal, a portion of the first audio signal emitted through the first opening and the second audio signal emitted through the second opening may be offset from each other. Based on that a portion of the first audio signal and a portion of the second audio signal are offset, only a remaining portion of the first audio signal emitted in the second direction through the third opening may be recognized by a user of the electronic device 200. In other words, when at least a portion of the first audio signal is offset by a portion of the second audio signal, only a remaining portion of the first audio signal may be emitted through the third opening.

According to an embodiment, the processor 210 may identify an execution of a designated application (e.g., a phone application) while the state of the electronic device 200 is in the first state. While the designated application is being executed, the processor 210 may provide a service (e.g., a phone service) related to the designated application through the first audio signal emitted through the third opening. A direction of the first audio signal emitted through the third opening may face a portion (e.g., an ear or eardrum) of the user's body.

The processor 210 may output the second audio signal having the phase opposite (or substantially opposite) to the phase of the first audio signal using the second speaker 232 through the second opening, in order to enhance the user experience with respect to a provided service. When the phase of the second audio signal is opposite (or substantially opposite) to the phase of the first audio signal, a portion of the first audio signal emitted through the first opening and the second audio signal emitted through the second opening may be offset from each other. Accordingly, since only the first audio signal emitted through the third opening may be recognized by the user while a designated application is being executed, the user experience may be increased.

According to an embodiment, while the phone application is being executed, the phase of the second audio signal outputted from the second speaker 232 may be changed according to a size (or volume) of the first audio signal outputted from the first speaker 231. According to an embodiment, while the phone application is being executed, the second audio signal (or a frequency and a phase of the second audio signal) may be determined based on a voice signal received from another user. According to an embodiment, the processor 210 may identify noise and/or leakage sound related to an external environment, by using a microphone included in the electronic device 200. The processor 210 may identify (or generate) the second audio signal (or the frequency and the phase of the second audio signal) based on noise and/or leakage sound related to the external environment.

According to an embodiment, while the state of the electronic device 200 is in the first state, the processor 210 may not perform operation 430 based on setting information of the designated application. For example, in the phone application, an audio signal may be set to be output in a speaker mode. When the audio signal is set to be outputted in the speaker mode in the phone application, the processor 210 may not perform operation 430. When the phone application is set to output the audio signal in speaker mode, the processor 210 may output the first audio signal and the second audio signal having a phase corresponding to (or substantially the same as) a phase of the first audio signal through the second opening.

According to an embodiment, even when the state of the electronic device 200 is the first state, the processor 210 may not perform operation 430 based on execution of another application distinct from the designated application. For example, the processor 210 may perform operation 440 based on the execution of the other application distinct from the designated application.

In operation 440, when the state of the electronic device 200 is not the first state, the processor 210 may output the first audio signal and the second audio signal having a phase corresponding to (or substantially the same as) the phase of the first audio signal through the second opening. For example, based on identifying that the state of the electronic device 200 is not the first state, the processor 210 may output the first audio signal and the second audio signal having a phase corresponding to the phase of the first audio signal through the second opening.

For example, when the state of the electronic device 200 is the second state, the processor 210 may output the first audio signal and the second audio signal having a phase corresponding to the phase of the first audio signal through the second opening. For example, based on identifying that the state of the electronic device 200 is the second state, the processor 210 may output the first audio signal and the second audio signal having a phase corresponding to the phase of the first audio signal through the second opening.

According to an embodiment, the processor 210 may provide a stereophonic sound based on the first audio signal and the second audio signal. The processor 210 may provide a surround sound to the user of the electronic device 200, by configuring the first audio signal and the second audio signal differently from each other.

Hereinafter, an example of the first speaker 231 and the second speaker 232 disposed according to a shape (or form factor or configuration or state) of the electronic device 200 will be described. In addition, an example of an operation of the first speaker 231 and the second speaker 232 performed based on a state of the electronic device 200 will be described.

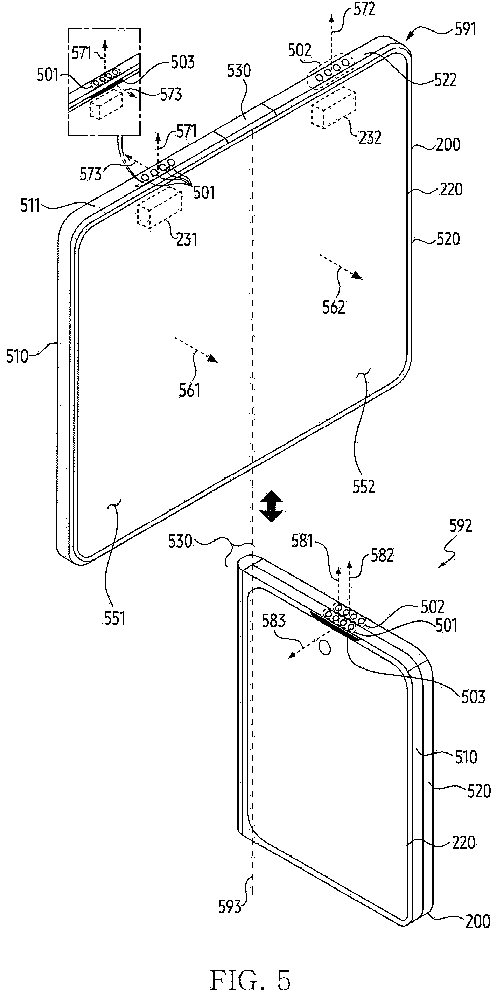

In FIG. 5, the arrangement and operation of the speaker 230 (e.g., the first speaker 231 and the second speaker 232) when the electronic device 200 includes a first housing and a second housing, and the first housing and the second housing have a shape capable of being folded with respect to one axis will be described. For example, the electronic device 200 may be referred to as a foldable device that is folded along a vertical axis.

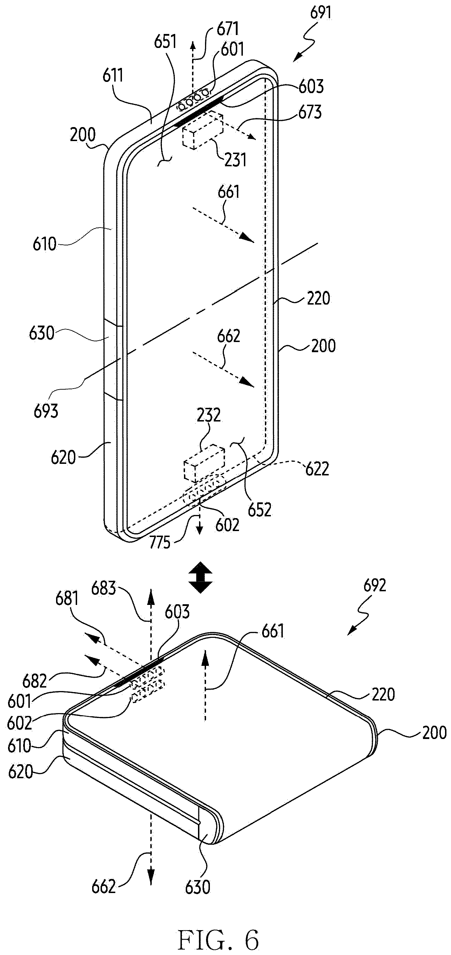

In FIG. 6, the arrangement and operation of the speaker 230 (e.g., the first speaker 231 and the second speaker 232) when the electronic device 200 includes a first housing and a second housing, and the first housing and the second housing have a shape capable of being folded with respect to one axis will be described. For example, the electronic device 200 may be referred to as a foldable device that is folded along a horizontal axis.

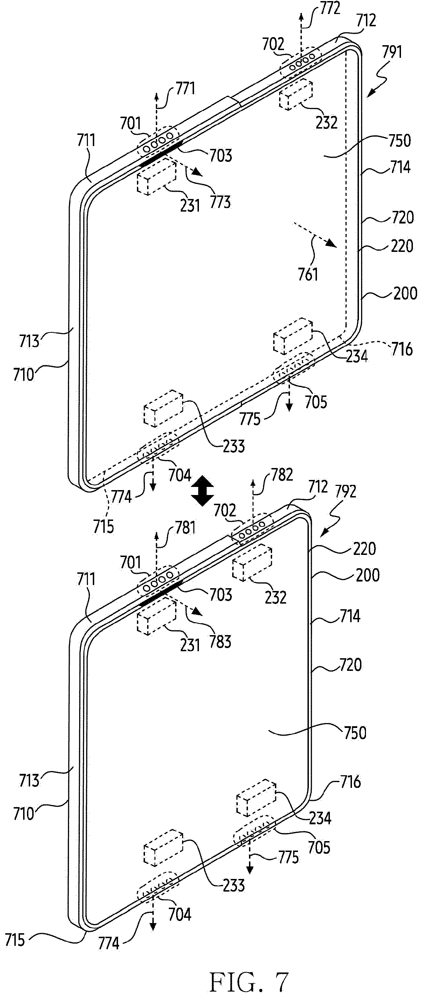

In FIG. 7, the arrangement and operation of the speaker 230 (e.g., the first speaker 231 and the second speaker 232) when the electronic device 200 includes a first housing and a second housing, and the second housing has a shape capable of being inserted into the first housing will be described. For example, the electronic device 200 may be referred to as a rollable device that provides an extended position and a retracted position.

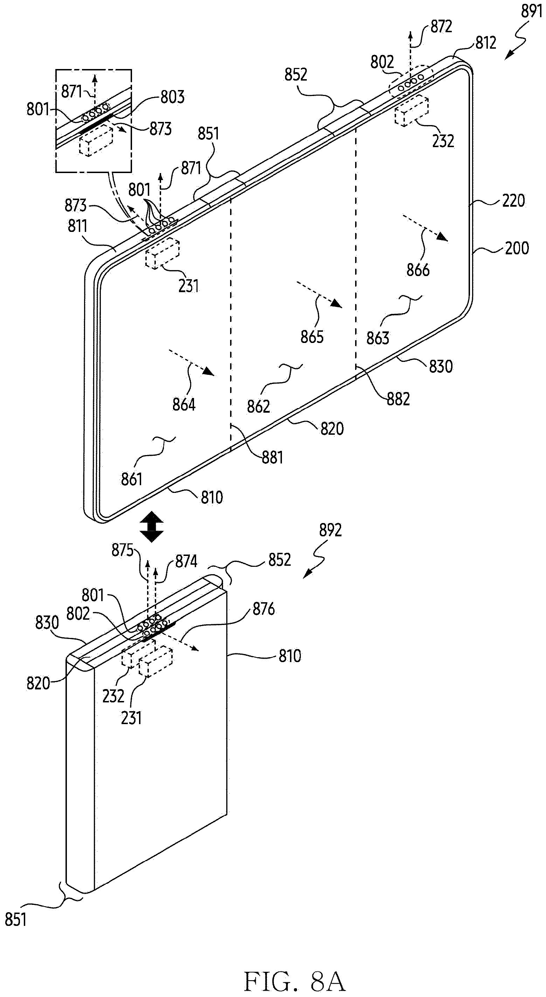

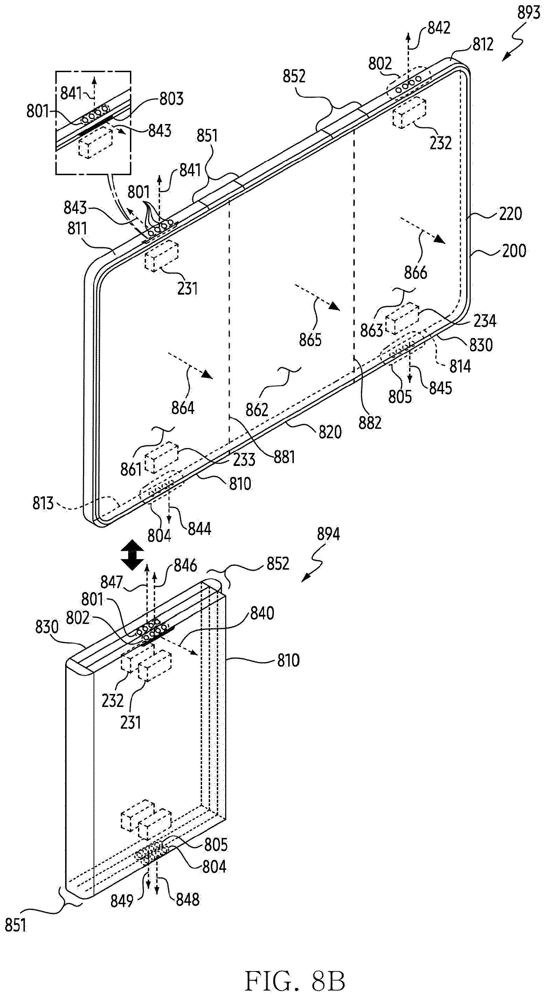

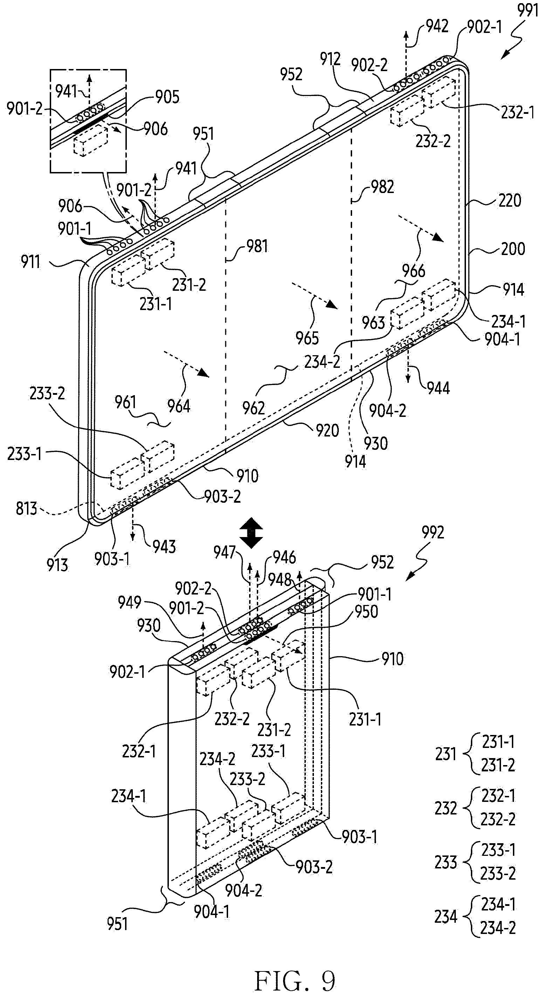

In FIGS. 8A, 8B, and 9, the arrangement and operation of the speaker 230 (e.g., the first speaker 231 and the second speaker 232) when the electronic device 200 includes a first housing, a second housing, and a third housing and has a shape capable of being folded with respect to two axes will be described. For example, the electronic device 200 may be referred to as a foldable device that is folded along two axes. For example, the electronic device 200 may be referred to as a multi-foldable device that provides states including an infolded state and an unfolded state.

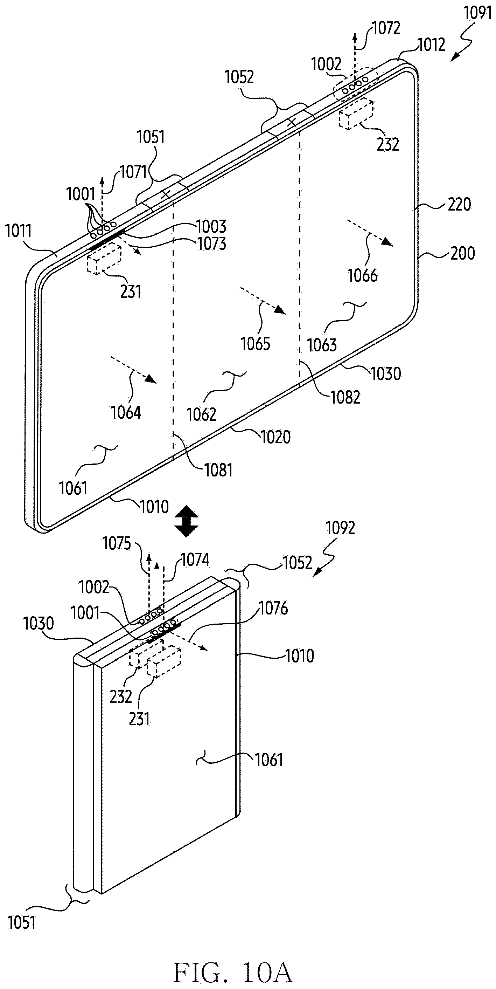

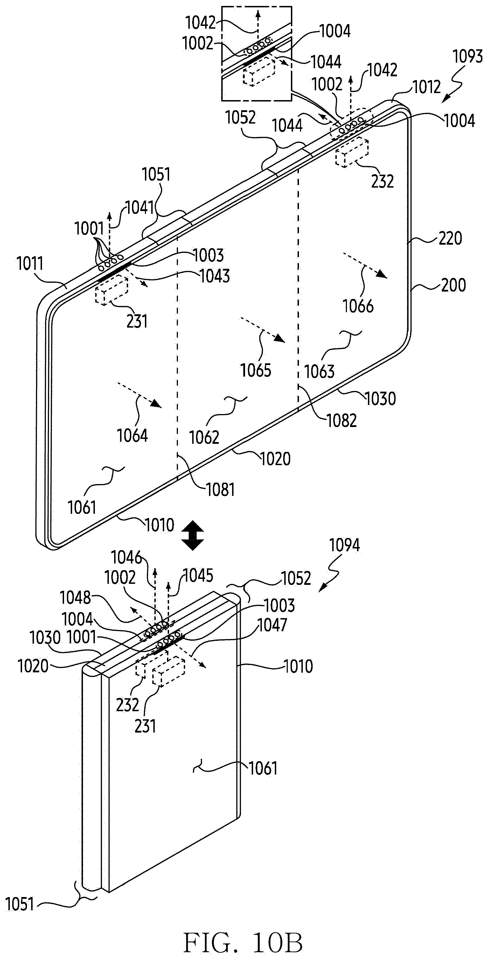

In FIGS. 10A and 10B, the arrangement and operation of the speaker 230 (e.g., the first speaker 231 and the second speaker 232) when the electronic device 200 includes a first housing, a second housing, and a third housing and has a shape capable of being folded with respect to two axes will be described. For example, the electronic device 200 may be referred to as a foldable device that is folded along two axes. For example, the electronic device 200 may be referred to as a multi-foldable device that provides states including an outfolded state and an unfolded state.

FIG. 5 illustrates an example of an electronic device including one or more speakers according to an embodiment.

Referring to FIG. 5, an electronic device 200 may be a foldable device that is folded along a vertical axis (e.g., a folding axis 593). The electronic device 200 may include a first housing 510, a second housing 520, and a hinge structure 530. For example, the hinge structure 530 may rotatably couple the first housing 510 to the second housing 520 with respect to the folding axis 593. A display 220 (e.g., a flexible display) may be divided into a first display area 551 and a second display area 552 based on the folding axis 593. The first display area 551 may correspond to a surface of the first housing 510. The second display area 552 may correspond to a surface of the second housing 520.

A first speaker 231 may be disposed in the first housing 510 to emit a first audio signal through a first opening 501 and a third opening 503. For example, the first speaker 231 may be disposed in the first housing 510 to emit the first audio signal through the first opening 501 formed on a first side surface 511 of the first housing 510. For example, the first side surface 511 may be substantially perpendicular to a direction toward which the first display area 551 faces.

For example, the first speaker 231 may be disposed in the first housing 510, in order to emit the first audio signal through the third opening 503 formed on another surface opposite to a surface of the first housing 510 corresponding to the first display area 551. For example, the third opening 503 may be formed in a direction opposite to a first direction 561 toward which the first display area 551 faces. The first audio signal may be emitted through the third opening 503 in a direction opposite to the first direction 561 toward which the first display area 551 faces.

The second speaker 232 may be disposed in the second housing 520 to emit a second audio signal through a second opening 502. For example, the second speaker 232 may be disposed in the second housing 520, in order to emit the second audio signal through the second opening 502 formed on a second side surface 522 of the second housing 520. For example, the second side surface 522 may be substantially perpendicular to the second display area 552. The second audio signal may not be emitted in a direction toward which the second display area 552 faces, and a direction opposite to the direction 562 toward which the second display area 552 faces. As an example, the second housing 520 may be formed so that the second audio signal is not emitted in the direction 562 toward which the second display area 552 faces, and a direction opposite to the direction 562 toward which the second display area 552 faces.

In a state 591, the first opening 501 may be formed to face a direction corresponding to (or the same as) a direction toward which the second opening 502 faces.

In the state 591, the first direction 561 toward which the first display area 551 faces may correspond to the second direction 562 toward which the second display area 552 faces. The state 591 may be referred to as an unfolded state. In the state 591, a distance between the first speaker 231 and the second speaker 232 may be greater than or equal to a designated distance. The state 591 may be an example of the second state described in FIG. 4.

In the state 591, the processor 210 may identify a state of the electronic device 200 as the second state. Based on identifying the state of the electronic device 200 as the second state, the processor 210 may output the first audio signal and the second audio signal having a phase corresponding to (or substantially the same as) a phase of the first audio signal. The processor 210 may emit a first audio signal having a first phase in a direction 571 and a direction 573 through the first speaker 231. The processor 210 may emit a second audio signal having a second phase corresponding to (or substantially the same as) the first phase in a direction 572 through the second speaker 232.

In a state 592, the first direction 561 toward which the first display area 551 faces may be opposite to the second direction 562 toward which the second display area 552 faces. The state 592 may be referred to as a folded state. In the state 592, a distance between the first speaker 231 and the second speaker 232 may be less than the designated distance. The state 592 may be an example of the first state described in FIG. 4.

In the state 592, the processor 210 may identify a state of the electronic device 200 as the first state. Based on identifying the state of the electronic device 200 as the first state, the processor 210 may output the first audio signal and the second audio signal having a phase distinct from a phase of the first audio signal. The processor 210 may emit a first audio signal having the first phase in a direction 581 and a direction 583 through the first speaker 231. The processor 210 may emit the second audio signal having a second phase distinct from the first phase in a direction 582, through the second speaker 232. For example, the first phase may be opposite (or substantially opposite) to the second phase. When the first phase is opposite to the second phase, the first audio signal emitted through the direction 581 (or the first opening 501) and the second audio signal emitted through the direction 582 (or the second opening 502) may be offset from each other. For example, since the first audio signal and the second audio signal are generated based on the same sound source, in case that the first phase is opposite to the second phase, the first audio signal emitted through the direction 581 (or the first opening 501) and the second audio signal emitted through the direction 582 (or the second opening 502) may be offset from each other.

The processor 210 may offset (or remove) the first audio signal (or at least a portion of the first audio signal) emitted through the direction 581, by using the second audio signal emitted through the direction 582. The processor 210 may maintain the first audio signal emitted through the direction 583. For example, the first audio signal emitted through the direction 583 may be better recognized by the user of the electronic device 200.

For example, the processor 210 may identify that a designated application (e.g., a phone application) is executed in the state 592. Based on identifying that the designated application is executed, the processor 210 may output the first audio signal and the second audio signal having a phase distinct from the phase of the first audio signal. As an example, only when the user of the electronic device 200 is on a call, the processor 210 may output the first audio signal and the second audio signal having a phase distinct from the phase of the first audio signal. According to an embodiment, the processor 210 may identify that another application distinct from the designated application is executed in the state 592. The processor 210 may output the first audio signal and the second audio signal having a phase corresponding to the phase of the first audio signal, based on identifying that the other application distinct from the designated application is executed.

FIG. 6 illustrates an example of an electronic device including one or more speakers according to an embodiment.

Referring to FIG. 6, an electronic device 200 may be a foldable device that is folded along a horizontal axis (e.g., a folding axis 693). The electronic device 200 may include a first housing 610, a second housing 620, and a hinge structure 630. For example, the hinge structure 630 may rotatably couple the first housing 610 to the second housing 620 with respect to the folding axis 693. A display 220 (e.g., a flexible display) may be divided into a first display area 651 and a second display area 652 based on the folding axis 693. The first display area 651 may correspond to a surface of the first housing 610. The second display area 652 may correspond to a surface of the second housing 620.

The electronic device 200 may be folded so that the display 220 faces the outside. For example, in a folded state (e.g., a state 692), the first display area 651 and the second display area 652 may be spaced apart from each other. The display 220 may function as a portion of the exterior of the electronic device 200 in the folded state.

The first speaker 231 may be disposed in the first housing 610 to emit a first audio signal through a first opening 601 and a third opening 603. For example, the first speaker 231 may be disposed in the first housing 610 to emit the first audio signal through the first opening 601 formed in a first side surface 611 of the first housing 610. For example, the first side surface 611 may be substantially perpendicular to the first display area 651.

For example, the first speaker 231 may be disposed in the first housing 610, in order to emit the first audio signal through the third opening 603 formed on a surface of the first housing 610 corresponding to the first display area 651. For example, the third opening 603 may be formed in a first direction 661 toward which the first display area 651 faces. The first audio signal may be emitted in the first direction 661 toward which the first display area 651 faces through the third opening 603.

The second speaker 232 may be disposed in the second housing 620 to emit a second audio signal through a second opening 602. For example, the second speaker 232 may be disposed in the second housing 620, in order to emit the second audio signal through the second opening 602 formed in a second side surface 622 of the second housing 620. For example, the second side surface 622 may be substantially perpendicular to a second direction 662 toward which the second display area 652 faces. The second audio signal may not be emitted in the second direction 662 toward which the second display area 652 faces and a direction opposite to the second direction 662 toward which the second display area 652 faces. For example, the second housing 620 may be formed so that the second audio signal is not emitted in the second direction 662 toward which the second display area 652 faces and the direction opposite to the second direction 662 toward which the second display area 652 faces.

In a state 691, the first opening 601 may be formed to face a direction distinct from a direction toward which the second opening 602 faces (or a direction opposite to the direction toward which the second opening 602 faces).

In the state 691, the first direction 661 toward which the first display area 651 faces may correspond to the second direction 662 toward which the second display area 652 faces. The state 691 may be referred to as an unfolded state. In the state 691, a distance between the first speaker 231 and the second speaker 232 may be greater than or equal to a designated distance. The state 691 may be an example of the second state described in FIG. 4.

In the state 691, the processor 210 may identify a state of the electronic device 200 as the second state. Based on identifying the state of the electronic device 200 as the second state, the processor 210 may output a first audio signal and a second audio signal having a phase corresponding to the phase of the first audio signal. The processor 210 may emit a first audio signal having a first phase in a direction 671 and a direction 673, through the first speaker 231. The processor 210 may emit a second audio signal having a second phase corresponding to the first phase in a direction 672, through the second speaker 232.

In a state 692, the first direction 661 toward which the first display area 651 faces may be opposite to the second direction 662 toward which the second display area 652 faces. The state 692 may be referred to as a folded state. In the state 692, the distance between the first speaker 231 and the second speaker 232 may be less than the designated distance. The state 692 may be an example of the first state described in FIG. 4.

In the state 692, the processor 210 may identify the state of the electronic device 200 as the first state. Based on identifying the state of the electronic device 200 as the first state, the processor 210 may output the first audio signal and the second audio signal having a phase distinct from the phase of the first audio signal. The processor 210 may emit a first audio signal having a first phase in a direction 681 and a direction 683, through the first speaker 231. The processor 210 may emit a second audio signal having a second phase distinct from the first phase, through the second speaker 232 in a direction 682. For example, the first phase may be opposite to the second phase. When the first phase is opposite to the second phase, the first audio signal emitted through the direction 681 (or the first opening 601) and the second audio signal emitted through the direction 682 (or the second opening 602) may be offset from each other. For example, since the first audio signal and the second audio signal are generated based on the same sound source, in case that the first phase is opposite to the second phase, the first audio signal emitted through the direction 681 (or the first opening 601) and the second audio signal emitted through the direction 682 (or the second opening 602) may be offset from each other.

The processor 210 may offset (or remove) the first audio signal (or at least portion of the first audio signal) emitted through the direction 681, by using the second audio signal emitted through the direction 682. For example, the processor 210 may maintain the first audio signal emitted through the direction 683. The first audio signal emitted through the direction 683 may be better recognized by the user of the electronic device 200.

For example, the processor 210 may identify that a designated application (e.g., a phone application) is executed in the state 692. Based on identifying that the designated application is executed, the processor 210 may output the first audio signal and the second audio signal having a phase distinct from the phase of the first audio signal. As an example, only when a user of the electronic device 200 is on a call, the processor 210 may output the first audio signal and the second audio signal having a phase distinct from the phase of the first audio signal. According to an embodiment, the processor 210 may identify that another application distinct from the designated application is executed, in the state 692. Based on identifying that the other application distinct from the designated application is being executed, the processor 210 may output the first audio signal and the second audio signal having a phase corresponding to the phase of the first audio signal (or substantially the same phase as the first audio signal and the second audio signal).

FIG. 7 illustrates an example of an electronic device including one or more speakers according to an embodiment.

Referring to FIG. 7, an electronic device 200 may be a rollable device that provides an extended position and a retracted position. In an embodiment, the electronic device 200 may include a first housing 710, a second housing 720, and an actuator (not illustrated). For example, the actuator may be configured to move the second housing 720 with respect to the first housing 710. For example, in the retracted position, the second housing 720 may be inserted into the first housing 710. In the extended position, the second housing 720 may be extracted from the first housing 710. For example, the second housing 720 (or a portion of the second housing 720) with respect to the first housing 710 may be slid-out or slid-in.

As the second housing 720 moves between the retracted position and the extended position, a display 220 (e.g., a flexible display) may be coupled to the first housing 710 and the second housing 720 such that a display area 750 (or a size of the display area 750) of the display 220 changes. For example, according to the extended position and the retracted position, the display 220 may be inserted into or extracted from a side surface 713 of the first housing 710. For example, according to the extended position and the retracted position, the display 220 may be inserted into or extracted from a side surface 714 of the second housing 720. For example, as the second housing 720 is slid-out with respect to the first housing 710, a portion of the display 220 may be spread out to the outside of the first housing 710 or the second housing 720. As the second housing 720 is slid-in with respect to the first housing 710, a portion of the display 220 may be inserted into the first housing 710 or the second housing 720.

The size of the display area 750 of the display 220 may be changed according to the retracted position and the extended position. The display area 750 of the display 220 may have the smallest size in the retracted position. The display area 750 of the display 220 may have the largest size in the extended position.

A first speaker 231 may be disposed in the first housing 710 to emit a first audio signal through a first opening 701 and a third opening 703. For example, the first speaker 231 may be disposed in the first housing 710 to emit the first audio signal through the first opening 701 formed on a side surface 711 of the first housing 710. For example, the side surface 711 may be substantially perpendicular to the display area 750.

For example, the first speaker 231 may be disposed in the first housing 710, in order to emit the first audio signal through the third opening 703 formed on a surface of the first housing 710 corresponding to the display area 750. For example, the third opening 703 may be formed in a direction 761 toward which the display area 750 faces.

A second speaker 232 may be disposed in the second housing 720 to emit a second audio signal through a second opening 702. For example, the second speaker 232 may be disposed in the second housing 720, in order to emit the second audio signal through the second opening 702 formed in a side surface 712 of the second housing 720. For example, the side surface 712 may be substantially perpendicular to the direction 761 toward which the display area 750 faces. The second audio signal may not be emitted in the direction 761 toward which the display area 750 faces and in a direction opposite to the direction 761 toward which the display area 750 faces. For example, the second housing 720 may be formed so that the second audio signal is not emitted in the direction toward which the display area 750 faces and the direction opposite to the direction 761 toward which the display area 750 faces.

According to an embodiment, the electronic device 200 may further include a third speaker 233 and/or a fourth speaker 234.

The third speaker 233 may be disposed in the first housing 710 to emit a third audio signal in a direction 774 through a fourth opening 704 formed in a side surface 715 of the first housing 710. For example, the side surface 715 may be substantially perpendicular to the display area 750. A direction toward which the side surface 715 faces may be opposite to a direction toward which the side surface 711 faces. The side surface 715 may face the side surface 711. For example, the side surface 715 may be substantially parallel to the side surface 711.

The fourth speaker 234 may be disposed in the second housing 720 to emit a fourth audio signal in a direction 775 through a fifth opening 705 formed in a side surface 716 of the second housing 720. For example, the side surface 716 may be substantially perpendicular to the display area 750. A direction toward which the side surface 716 faces may be opposite to a direction toward which the side surface 712 faces. The side surface 716 may face the side surface 712. For example, the side surface 716 may be substantially parallel to the side surface 712.

In a state 791, the first opening 701 may be formed to face a direction corresponding to a direction toward which the second opening 702 faces (or the direction toward which the second opening 702 faces). The state 791 may be referred to as the extended position. The state 791 may be a state toward which the second housing 720 is slid out with respect to the first housing 710. In the state 791, a distance between the first speaker 231 and the second speaker 232 may be greater than or equal to a designated distance. The state 791 may be an example of the second state described in FIG. 4.

In the state 791, the processor 210 may identify the state of the electronic device 200 as the second state. Based on identifying the state of the electronic device 200 as the second state, the processor 210 may output a first audio signal and a second audio signal having a phase corresponding to the phase of the first audio signal. The processor 210 may emit a first audio signal having a first phase in a direction 771 and a direction 773 through the first speaker 231. The processor 210 may emit a second audio signal having a second phase corresponding to the first phase in a direction 772 through the second speaker 232.

In the state 792, the first opening 701 may be formed to face a direction corresponding to the direction toward which the second opening 702 faces (or the direction toward which the second opening 702 faces). The state 792 may be referred to as a retracted position. The state 792 may be a state in which the second housing 720 is slid-in with respect to the first housing 710. In the state 792, the distance between the first speaker 231 and the second speaker 232 may be less than the designated distance. The state 791 may be an example of the first state described in FIG. 4.

In a state 792, the processor 210 may identify the state of the electronic device 200 as the first state. Based on identifying the state of the electronic device 200 as the first state, the processor 210 may output the first audio signal and the second audio signal having a phase distinct from the phase of the first audio signal. The processor 210 may emit a first audio signal having a first phase in a direction 781 and a direction 783 through the first speaker 231. The processor 210 may emit a second audio signal having a second phase distinct from the first phase in a direction 782, through the second speaker 232. For example, the first phase may be opposite to the second phase. When the first phase is opposite to the second phase, the first audio signal emitted through the direction 781 (or the first opening 701) and the second audio signal emitted through the direction 782 (or the second opening 702) may be offset from each other. As an example, since the first audio signal and the second audio signal are generated based on the same sound source, in the case that the first phase is opposite to the second phase, the first audio signal emitted through the direction 781 and the second audio signal emitted through the direction 782 may be offset from each other.

The processor 210 may offset (or remove) the first audio signal (or at least portion of the first audio signal) emitted through the direction 781, by using the second audio signal emitted through the direction 782. The processor 210 may maintain the first audio signal emitted through the direction 783. The first audio signal emitted through the direction 783 may be better recognized by a user of the electronic device 200.

For example, the processor 210 may identify that a designated application (e.g., a phone application) is executed in the state 792. Based on identifying that the designated application is executed, the processor 210 may output the first audio signal and the second audio signal having a phase distinct from the phase of the first audio signal. As an example, only when the user of the electronic device 200 is on a call, the processor 210 may output the first audio signal and the second audio signal having a phase distinct from the phase of the first audio signal. According to an embodiment, the processor 210 may identify that another application distinct from the designated application is executed, in the state 792. Based on identifying that the other application distinct from the designated application is executed, the processor 210 may output the first audio signal and the second audio signal having a phase corresponding to the phase of the first audio signal.

According to an embodiment, the electronic device 200 may provide a stereophonic sound using the first speaker 231, the second speaker 232, the third speaker 233, and the fourth speaker 234.

For example, in the state 791, the processor 210 may output the first audio signal using the first speaker 231 and the third speaker 233. The processor 210 may output the second audio signal using the second speaker 232 and the fourth speaker 234. As an example, a frequency band of the first audio signal and a frequency band of the second audio signal may be set to be different from each other. For example, a phase of the second audio signal may be set to correspond to a phase of the first audio signal. For example, in at least some bands, a phase of the second audio signal may be set to correspond to a phase of the first audio signal.

For example, in the state 792, the processor 210 may output the first audio signal using the first speaker 231 and the second speaker 232. The processor 210 may output the second audio signal using the third speaker 233 and the fourth speaker 234. As an example, a frequency band of the first audio signal and a frequency band of the second audio signal may be set to be different from each other. A phase of the second audio signal may be set to correspond to a phase of the first audio signal. For example, in at least some bands, a phase of the second audio signal may be set to correspond to a phase of the first audio signal.

FIGS. 8A and 8B illustrate an example of an electronic device including one or more speakers according to an embodiment.

Referring to FIGS. 8A and 8B, an electronic device 200 may include a first housing 810, a second housing 820, a third housing 830, a first hinge structure 851, and a second hinge structure 852. The electronic device 200 may have a shape capable of being folded based on two axes with respect to the first hinge structure 851 and the second hinge structure 852. For example, the electronic device 200 may be referred to as a multi-foldable device that provides an infolded state and an unfolded state.

The electronic device 200 may be a foldable device that is folded along a first axis 881 and a second axis 882. The first hinge structure 851 may rotatably couple the first housing 810 and the second housing 820 with respect to the first folding axis 881. The second hinge structure 852 may rotatably couple the second housing 820 and the third housing 830 with respect to the second folding axis 882.

A display 220 (e.g., a flexible display) may be divided into a first display area 861, a second display area 862, and a third display area 863 with respect to the first axis 881 and the second axis 882. The first display area 861 may correspond to a surface of the first housing 810. The second display area 862 may correspond to a surface of the second housing 820. The third display area 863 may correspond to a surface of the third housing 830.

For example, in the unfolded state (e.g., the state 891 of FIG. 8A or the state 893 of FIG. 8B), a direction 864 toward which the first display area 861 faces, a direction 865 toward which the second display area 862 faces, and a direction 866 toward which the third display area 863 faces may be set substantially the same. The first display area 861, the second display area 862, and the third display area 863 may form a single plane.

For example, in the in-folding state (e.g., the state 892 of FIG. 8A or the state 894 of FIG. 8B), the direction 864 toward which the first display area 861 faces and the direction 865 toward which the second display area 862 faces may be set to be opposite to each other. In the infolded state, the direction 865 toward which the second display area 862 faces and the direction 866 toward which the third display area 863 faces may be set to be opposite to each other. When a state of the electronic device 200 is changed from the unfolded state to the infolded state, the third housing 830 may be rotated with respect to the second housing 820. As the third housing 830 is rotated with respect to the second housing 820, the third display area 863 may be in contact with the second display area 862. After the third housing 830 is rotated with respect to the second housing 820, the first housing 810 may be rotated with respect to the second housing 820. As the first housing 810 is rotated with respect to the second housing 820, the first display area 861 may be in contact with a surface opposite to a surface of the third housing 830 corresponding to the third display area 863. As the first housing 810 is rotated with respect to the second housing 820, the direction 864 toward which the first display area 861 may be set to face the second display area 862 and the third display area 863.

Referring to FIG. 8A, a first speaker 231 may be disposed in the first housing 810 to emit a first audio signal through a first opening 801 and a third opening 803. For example, the first speaker 231 may be disposed in the first housing 810, in order to emit the first audio signal through the first opening 801 formed on a side surface 811 of the first housing 810. For example, the first side surface 811 may be substantially perpendicular to the first display area 861.

For example, the first speaker 231 may be disposed in the first housing 810, in order to emit the first audio signal through the third opening 803 formed on another surface opposite to the surface of the first housing 810 corresponding to the first display area 861. For example, the third opening 803 may be formed in a direction opposite to a direction 864 toward which the first display area 861 faces. The first audio signal may be emitted through the third opening 803 in a direction opposite to the direction 864 toward which the first display area 861 faces.

A second speaker 232 may be disposed in the third housing 830 to emit a second audio signal through a second opening 802. For example, the second speaker 232 may be disposed in the third housing 830, in order to emit the second audio signal through the second opening 802 formed on a side surface 812 of the third housing 830. For example, the side surface 812 may be substantially perpendicular to the third display area 863. The second audio signal may not be emitted in the direction 866 toward which the third display area 863 faces and a direction opposite to the direction 866 toward which the third display area 863 faces. For example, the third housing 830 may be formed so that the second audio signal is not emitted in the direction 866 toward which the third display area 863 faces, and in the direction opposite to the direction 866 toward which the third display area 863 faces.

In a state 891, the first opening 801 may be formed to face a direction corresponding to (or in the same direction as) a direction toward which the second opening 802 faces. In the state 891, a distance between the first speaker 231 and the second speaker 232 may be greater than or equal to a designated distance. The state 891 may be an example of the second state described in FIG. 4.

In the state 891, the processor 210 may identify a state of the electronic device 200 as the second state. Based on identifying the state of the electronic device 200 as the second state, the processor 210 may output a first audio signal and a second audio signal having a phase corresponding to the phase of the first audio signal. The processor 210 may emit a first audio signal having a first phase in a direction 871 and a direction 873 through the first speaker 231. The processor 210 may emit a second audio signal having a second phase corresponding to the first phase in a direction 872 through the second speaker 232.

In a state 892, the distance between the first speaker 231 and the second speaker 232 may be less than the designated distance. The state 892 may be an example of the first state described in FIG. 4.

In the state 892, the processor 210 may identify the state of the electronic device 200 as the first state. Based on identifying the state of the electronic device 200 as the first state, the processor 210 may output the first audio signal and the second audio signal having a phase distinct from the phase of the first audio signal. The processor 210 may emit a first audio signal having a first phase in a direction 874 and a direction 876 through the first speaker 231. The processor 210 may emit a second audio signal having a second phase distinct from the first phase through the second speaker 232 in a direction 875. For example, the first phase may be opposite to the second phase. When the first phase is opposite to the second phase, the first audio signal emitted through the direction 874 (or the first opening 801) and the second audio signal emitted through the direction 875 (or the second opening 802) may be offset from each other. For example, since the first audio signal and the second audio signal are generated based on the same sound source, in case that the first phase is opposite to the second phase, the first audio signal emitted through the direction 874 and the second audio signal emitted through the direction 875 may be offset from each other.

The processor 210 may offset (or remove or cancel out) the first audio signal (or at least portion of the first audio signal) emitted through the direction 874, by using the second audio signal emitted through the direction 875. The processor 210 may maintain the first audio signal emitted through the direction 876. The first audio signal emitted through the direction 876 may be better recognized by a user of the electronic device 200.

For example, the processor 210 may identify that a designated application (e.g., a phone application) is being executed while the electronic device 200 is in the state 892. Based on identifying that the designated application is executed, the processor 210 may output the first audio signal and the second audio signal having a phase distinct from the phase of the first audio signal. For example, only when the user of the electronic device 200 is on a call, the processor 210 may output the first audio signal and the second audio signal having a phase distinct from the phase of the first audio signal. According to an embodiment, in the state 892, the processor 210 may identify that another application distinct from the designated application is executed. The processor 210 may output the first audio signal and the second audio signal having a phase corresponding to the phase of the second audio signal, based on or in response to identifying that another application distinct from (that is, different to) the designated application is being executed.

Referring to FIG. 8B, the electronic device 200 may include a first speaker 231, a second speaker 232, a third speaker 233, and a fourth speaker 834. The electronic device 200 may perform the operations described in FIG. 8A using the first speaker 231 and the second speaker 232. According to an embodiment, the electronic device 200 may perform additional operations in addition to the operations described in FIG. 8A using the first speaker 231, the second speaker 232, the third speaker 233, and the fourth speaker 234.

The first speaker 231 may be disposed in the first housing 810 to emit a first audio signal through the first opening 801 and the third opening 803. For example, the first speaker 231 may be disposed in the first housing 810, in order to emit the first audio signal through the first opening 801 formed in the side surface 811 of the first housing 810 in a direction 841. For example, the first side surface 811 may be substantially perpendicular to a direction toward which the first display area 861 faces. The arrangement of the first speaker 231 illustrated in FIG. 8B may correspond to the arrangement of the first speaker 231 illustrated in FIG. 8A.

The second speaker 232 may be disposed in the third housing 830 to emit the second audio signal through the second opening 802. For example, the second speaker 232 may be disposed in the third housing 830, in order to emit the second audio signal through the second opening 802 formed in the side surface 812 of the third housing 830 in the direction 842. For example, the side surface 812 may be substantially perpendicular to the direction 866 toward which the third display area 863 faces. The second audio signal may not be emitted in the direction 866 toward which the third display area 863 faces, and in a direction opposite to the direction 866 toward which the third display area 863 faces. For example, the third housing 830 may be formed so that the second audio signal is not emitted in the direction 866 toward which the third display area 863 faces, and in the direction opposite to the direction 866 toward which the third display area 863 faces. The arrangement of the second speaker 232 illustrated in FIG. 8B may correspond to the arrangement of the second speaker 232 illustrated in FIG. 8A.

The third speaker 233 may be disposed in the first housing 810 to emit a third audio signal through the fourth opening 804 formed in a side surface 813 of the first housing 810 in a direction 844. For example, the side surface 813 may be substantially perpendicular to the first display area 861. A direction toward which the side surface 813 faces may be opposite to a direction toward which the side surface 811 faces. The side surface 813 may face the side surface 811. For example, the side surface 813 may be substantially parallel to the side surface 811.

The fourth speaker 234 may be disposed in the third housing 830 to emit a fourth audio signal through the fifth opening 805 formed in a side surface 814 of the second housing 820 in a direction 844. For example, the side surface 814 may be substantially perpendicular to the third display area 863. A direction toward which the side surface 814 faces may be opposite to a direction toward which the side surface 812 faces. The side surface 814 may face the side surface 812. For example, the side surface 814 may be substantially parallel to the side surface 812.

According to an embodiment, the electronic device 200 may provide a stereophonic sound using the first speaker 231, the second speaker 232, the third speaker 233, and the fourth speaker 234.

For example, in the state 893, the processor 210 may output the first audio signal using the first speaker 231 and the third speaker 233. The processor 210 may output the second audio signal using the second speaker 232 and the fourth speaker 234. As an example, a frequency band of the first audio signal and a frequency band of the second audio signal may be set to be different from each other. As an example, a phase of the second audio signal may be set to correspond to a phase of the first audio signal. As an example, in at least some bands, the phase of the second audio signal may be set to correspond to the phase of the first audio signal.

For example, in a state 894, the processor 210 may output the first audio signal using the first speaker 231 and the second speaker 232. The processor 210 may output the second audio signal using the third speaker 233 and the fourth speaker 234. For example, in the state 894, the processor 210 may emit the first audio signal in a direction 846 and a direction 840, using the first speaker 231. The processor 210 may emit the second audio signal in a direction 847, using the second speaker 232. The processor 210 may emit the third audio signal in a direction 848, using the third speaker 233. The processor 210 may emit the fourth audio signal in a direction 849, using the fourth speaker 234.

As an example, a frequency band of the first audio signal and a frequency band of the second audio signal may be set to be different from each other. A phase of the second audio signal may be set to correspond to the phase of the first audio signal. As an example, in at least some bands, the phase of the second audio signal may be set to correspond to the phase of the first audio signal.

As an example, the processor 210 may perform mono mixing, based on the audio signal outputted through the first speaker 231 and the audio signal outputted through the second speaker 232. The processor 210 may perform mono mixing, based on the audio signal outputted through the third speaker 233 and the audio signal outputted from the fourth speaker 234. The processor 210 may output the first audio signal using the first speaker 231 and the second speaker 232 based on mono mixing, and further increase the volume by outputting the second audio signal using the third speaker 233 and the fourth speaker 234 based on mono mixing. The above-described mono-mixing may be a technique (or hardware system) of increasing a volume (e.g., a low-frequency component) based on reinforcement interference that occurred caused by a monophonic signal meeting. According to an embodiment, the processor 210 may output a signal in which left and right stereo sound source is combined to one through the speaker 230 based on mono mixing. According to an embodiment, the processor 210 may selectively convert only the low-frequency component of the sound source into a monophonic signal based on mono-mixing, and output the converted monophonic signal through two speakers (e.g., the first speaker 231 and the second speaker 232).

FIG. 9 illustrates an example of an electronic device including one or more speakers according to an embodiment.

Referring to FIG. 9, an electronic device 200 may include a first housing 910, a second housing 920, a third housing 930, a first hinge structure 951, and a second hinge structure 952. The electronic device 200 may have a shape capable of being folded with respect to two axes based on the first hinge structure 951 and the second hinge structure 952. For example, the electronic device 200 may be referred to as a multi-foldable device that provides an infolded state and an unfolded state. The electronic device 200 illustrated in FIG. 9 may correspond to the electronic device 200 illustrated in FIGS. 8A and 8B.

The electronic device 200 may be a foldable device that is folded along a first folding axis 981 and a second folding axis 982. The first hinge structure 951 may rotatably couple the first housing 910 and the second housing 920 with respect to the first folding axis 981. The second hinge structure 952 may rotatably couple the second housing 920 and the third housing 930 with respect to the second folding axis 982.

A display 220 (e.g., a flexible display) may be divided into a first display area 961, a second display area 962, and a third display area 963 with respect to the first folding axis 981 and the second folding axis 982. The first display area 961 may correspond to a surface of the first housing 910. The second display area 962 may correspond to a surface of the second housing 920. The third display area 963 may correspond to a surface of the third housing 930.

For example, in the unfolded state (e.g., a state 991 of FIG. 9), a direction 964 toward which the first display area 961 faces, a direction 965 toward which the second display area 962 faces, and a direction 966 toward which the third display area 963 faces may be set to be the same. The first display area 961, the second display area 962, and the third display area 963 may form a single plane.

For example, in the infolded state (e.g., a state 992 of FIG. 9), the direction 964 toward which the first display area 961 faces and the direction 965 toward which the second display area 962 faces may be set to be opposite to each other. In the infolded state, the direction 965 toward which the second display area 962 faces and the direction 966 toward which the third display area 963 faces may be set to be opposite to each other. When a state of the electronic device 200 is changed from the unfolded state to the infolded state, the third housing 930 may be rotated with respect to the second housing 920. As the third housing 930 is rotated with respect to the second housing 920, the third display area 963 may be in contact with the second display area 962. After the third housing 930 is rotated with respect to the second housing 920, the first housing 910 may be rotated with respect to the second housing 920. As the first housing 910 is rotated with respect to the second housing 920, the first display area 961 may be in contact with a surface opposite to a surface of the third housing 930 corresponding to the third display area 963. As the first housing 910 is rotated with respect to the second housing 920, the direction 964 toward which the first display area 961 faces may be set to face the second display area 962 and the third display area 963.

An opening 901-1, an opening 901-2, an opening 902-1 and an opening 902-2 may be formed to face substantially the same direction. The opening 901-1 and the opening 901-2 may be disposed on a side surface 911 of the electronic device 200. The opening 902-1 and the opening 902-2 may be disposed on a side surface 912 of the electronic device 200. The side surface 911 and the side surface 912 may be located on substantially the same plane.

An opening 903-1, an opening 903-2, an opening 904-1 and an opening 904-2 may be formed to face substantially the same direction. The opening 903-1 and the opening 903-2 may be disposed on a side surface 913 of the electronic device 200. The opening 904-1 and the opening 904-2 may be disposed on a side surface 914 of the electronic device 200. The side surface 913 and the side surface 914 may be located on substantially the same plane.

A first speaker 231 may be disposed in the first housing 910 to emit an audio signal through the opening 901-1 and the opening 901-2. For example, the first speaker 231 may include a sub speaker 231-1 and a sub speaker 231-2. The sub speaker 231-1 may be disposed in the first housing 910 to emit a first audio signal through the opening 901-1 formed in the side surface 911 of the first housing 910. The sub speaker 231-2 may be disposed in the first housing 910 to emit a second audio signal through the opening 901-2 formed in the side surface 911 of the first housing 910. For example, the side surface 911 may be substantially perpendicular to the first display area 961.

For example, the electronic device 200 may further include an opening 905. The opening 905 may be disposed in the first housing 910. The opening 905 may be configured to emit an audio signal outputted through the first speaker 231 in a direction 906 opposite to the direction 964 toward which the first display area 961 faces.

As an example, the sub speaker 231-1 may be configured to output a first audio signal that is a signal of a high frequency band among audio signals outputted from the first speaker 231. For example, the sub speaker 231-1 may be referred to as a tweeter. The sub speaker 231-2 may be configured to output a second audio signal that is a signal of a low frequency band among audio signals outputted from the first speaker 231. For example, the sub speaker 231-2 may be referred to as a woofer or a bass speaker. However, it is not limited thereto. For example, the sub speaker 231-1 may be configured to output a second audio signal that is a signal of a low frequency band. The sub speaker 231-1 may be referred to as a woofer. The sub speaker 231-2 may be configured to output a first audio signal that is a signal of a high frequency band. The sub speaker 231-1 may be referred to as a tweeter.

A second speaker 232 may be disposed in the third housing 930 to emit an audio signal through the opening 902-1 and the opening 902-2. For example, the second speaker 232 may include a sub speaker 232-1 and a sub speaker 232-2. The sub speaker 232-1 may be disposed in the third housing 930 to emit a third audio signal through the opening 902-1 formed in the side surface 912 of the third housing 930. The sub speaker 232-2 may be disposed in the third housing 930 to emit a fourth audio signal through the opening 902-2 formed in the side surface 912 of the third housing 930. For example, the side surface 912 may be substantially perpendicular to the third display area 963. For example, the side surface 912 may be located on substantially the same plane as the side surface 911.

As an example, the sub speaker 232-1 may be configured to output a third audio signal that is a signal of a high frequency band among audio signals outputted from the second speaker 232. For example, the sub speaker 232-1 may be referred to as a tweeter. The sub speaker 232-2 may be configured to output a fourth audio signal that is a signal of a low frequency band among audio signals outputted from the second speaker 232. For example, the sub speaker 232-2 may be referred to as a woofer or a bass speaker. However, it is not limited thereto. For example, the sub speaker 232-1 may be configured to output a fourth audio signal that is a signal of a low frequency band. The sub speaker 232-1 may be referred to as a woofer. The sub-speaker 232-2 may be configured to output a third audio signal that is a signal of a high frequency band. The sub-speaker 232-1 may be referred to as a tweeter.

The third speaker 233 may be disposed in the first housing 910 to emit an audio signal through the opening 903-1 and the opening 903-2. For example, the third speaker 233 may include a sub speaker 233-1 and a sub speaker 233-2. The sub speaker 233-1 may be disposed in the first housing 910 to emit a fifth audio signal through the opening 903-1 formed in the side surface 913 of the first housing 910. The sub speaker 233-2 may be disposed in the first housing 910 to emit a sixth audio signal through the opening 903-2 formed in the side surface 913 of the first housing 910. For example, the side surface 913 may be substantially perpendicular to the first display area 961.

As an example, the sub speaker 233-1 may be configured to output a fifth audio signal that is a signal of a high frequency band among audio signals outputted from the third speaker 233. For example, the sub speaker 233-1 may be referred to as a tweeter. The sub speaker 233-2 may be configured to output a sixth audio signal that is a signal of a low frequency band among audio signals outputted from the third speaker 233. For example, the sub speaker 233-2 may be referred to as a woofer or a bass speaker. However, it is not limited thereto. For example, the sub speaker 233-1 may be configured to output a sixth audio signal that is a signal of a low frequency band. The sub speaker 233-1 may be referred to as a woofer. The sub speaker 233-2 may be configured to output a fifth audio signal that is a signal in a high frequency band. The sub speaker 233-1 may be referred to as a tweeter.

The fourth speaker 234 may be disposed in the third housing 930 to emit an audio signal through the opening 904-1 and the opening 904-2. For example, the fourth speaker 234 may include a sub speaker 234-1 and a sub speaker 234-2. The sub speaker 234-1 may be disposed in the third housing 930 to emit a seventh audio signal through the opening 904-1 formed in the side surface 914 of the third housing 930. The sub speaker 234-2 may be disposed in the third housing 930 to emit an eighth audio signal through the opening 904-2 formed in the side surface 914 of the third housing 930. For example, the side surface 914 may be substantially perpendicular to the third display area 963. For example, the side surface 914 may be located on substantially the same plane as the side surface 913.

As an example, the sub speaker 234-1 may be configured to output a seventh audio signal that is a signal of a high frequency band among audio signals outputted from the fourth speaker 234. For example, the sub speaker 234-1 may be referred to as a tweeter. The sub speaker 234-2 may be configured to output an eighth audio signal that is a signal of a low frequency band among audio signals outputted from the third speaker 234. For example, the sub speaker 234-2 may be referred to as a woofer or a bass speaker. However, it is not limited thereto. For example, the sub speaker 234-1 may be configured to output an eighth audio signal that is a signal of a low frequency band. The sub speaker 234-1 may be referred to as a woofer. The sub speaker 234-2 may be configured to output a seventh audio signal that is a signal in a high frequency band. The sub speaker 234-1 may be referred to as a tweeter.

In a state 991, a distance between a first speaker 231 (e.g., the sub speaker 231-1 or the sub speaker 231-2) and a second speaker 232 (e.g., the sub speaker 232-1 or the sub speaker 232-2) may be greater than or equal to a designated distance. The state 991 may be an example of the second state described in FIG. 4.

In the state 991, the processor 210 may identify a state of the electronic device 200 as the second state. Based on identifying the state of the electronic device 200 as the second state, the processor 210 may set the phases of each of the first to eighth audio signals to be the same. The processor 210 may output first to eighth audio signals having the same phase. The processor 210 may emit the first audio signal and the second audio signal in a direction 941 using the sub speaker 231-1 and the sub speaker 231-2. The processor 210 may emit the third audio signal and the fourth audio signal in a direction 942 using the sub speaker 232-1 and the sub speaker 232-2. The processor 210 may emit the fifth audio signal and the sixth audio signal in a direction 943 using the sub speaker 233-1 and the sub speaker 233-2. The processor 210 may emit the seventh audio signal and the eighth audio signal in a direction 944 using the sub speaker 234-1 and the sub speaker 234-2.

In a state 992, the distance between the first speaker 231 and the second speaker 232 may be less than the designated distance. The state 992 may be an example of the first state described in FIG. 4.

In the state 992, the processor 210 may identify a state of the electronic device 200 as the first state. Based on identifying the state of the electronic device 200 as the first state, the processor 210 may output a first audio signal and a third audio signal having a phase distinct from the phase of the first audio signal. As an example, the processor 210 may output a second audio signal in a direction 946 using the sub speaker 231-2. The processor 210 may output a first audio signal in a direction 948 using the sub speaker 231-1. The processor 210 may output a third audio signal having a phase distinct from the phase of the second audio signal in a direction 947 using the sub-speaker 232-2. According to an embodiment, the processor 210 may further output a fourth audio signal having a phase distinct from the phase of the first audio signal in a direction 949, using the sub-speaker 232-1. Accordingly, the second audio signal emitted through a direction 950 may be better recognized by the user of the electronic device 200.

According to an embodiment, in the state 992, the processor 210 may perform mono mixing based on (or using or with) the first audio signal and the third audio signal. In the state 992, the processor 210 may output a monophonic signal based on the first audio signal and the third audio signal. In the state 992, the processor 210 may output the second audio signal and the fourth audio signal as a stereophonic sound.

FIGS. 10A and 10B illustrate an example of an electronic device including one or more speakers according to an embodiment.

Referring to FIGS. 10A and 10B, an electronic device 200 may include a first housing 1010, a second housing 1020, a third housing 1030, a first hinge structure 1051, and a second hinge structure 1052. The electronic device 200 may have a shape capable of being folded with respect to two axes based on the first hinge structure 1051 and the second hinge structure 1052. For example, the electronic device 200 may be referred to as a multi-foldable device that provides an outfolded state and an unfolded state.

The electronic device 200 may be a foldable device that is folded along a first folding axis 1081 and a second folding axis 1082. The first hinge structure 1051 may rotatably couple the first housing 1010 and the second housing 1020 with respect to the first folding axis 1081. The second hinge structure 1052 may rotatably couple the second housing 1020 and the third housing 1030 with respect to the second folding axis 1082.

A display 220 (e.g., a flexible display) may be divided into a first display area 1061, a second display area 1062, and a third display area 1063 with respect to the first folding axis 1081 and the second folding axis 1082. The first display area 1061 may correspond to a surface of the first housing 1010. The second display area 1062 may correspond to a surface of the second housing 1020. The third display area 1063 may correspond to a surface of the third housing 1030.

For example, in the unfolded state (e.g., a state 1091 of FIG. 10A), a direction 1064 toward which the first display area 1061 faces, a direction 1065 toward which the second display area 1062 faces, and a direction 1066 toward which the third display area 1063 faces may be set to be the same. The first display area 1061, the second display area 1062, and the third display area 1063 may form a single plane.

For example, in the outfolded state (e.g., a state 1092 of FIG. 10A), the direction 1064 toward which the first display area 1061 faces and the direction 1065 toward which the second display area 1062 faces may be set be opposite to each other. In the outfolded state, the direction 1065 toward which the second display area 1062 faces and the direction 1066 toward which the third display area 1063 faces may be set to be opposite to each other. When a state of the electronic device 200 changes from the folded state to the outfolded state, the first housing 1010 may be rotated with respect to the second housing 1020, and the third housing 1030 may be rotated with respect to the second housing 1020. As the first housing 1010 is rotated with respect to the second housing 1020, the first display area 1061 may be folded to face the outside. As the third housing 1030 is rotated with respect to the second housing 1020, the third display area 1030 may be in contact with the second display area 1062. For example, in the outfolded state (e.g., the state 1092 of FIG. 10A or the state 1094 of FIG. 10B), the first display area 1061 and the second display area 1062 may be spaced apart from each other. The first display area 1061 may function as a portion of the exterior of the electronic device 200 in the outfolded state.

Referring to FIG. 10A, the first speaker 231 may be disposed in the first housing 1010 to emit a first audio signal through an opening 1001 and an opening 1003.

A state 1091 may be referred to as an unfolded state. In the state 1091, a distance between the first speaker 231 and the second speaker 232 may be greater than or equal to a designated distance. The state 1091 may be an example of the second state described with reference to FIG. 4.

In the state 1091, the first speaker 231 may emit a first audio signal in a direction 1071 through the opening 1001. The first speaker 231 may emit the first audio signal in a direction 1073 through the opening 1003. The second speaker 232 may emit a second audio signal in a direction 1072 through the opening 1002.

A state 1092 may be referred to as an outfolded state. In the state 1092, the distance between the first speaker 231 and the second speaker 232 may be less than the designated distance. The state 1092 may be an example of the first state described with reference to FIG. 4.

In the state 1092, the processor 210 may identify a state of the electronic device 200 as a first state. Based on identifying the state of the electronic device 200 as the first state, the processor 210 may output a first audio signal and a second audio signal having a phase distinct from the phase of the first audio signal. The processor 210 may emit a first audio signal having a first phase in a direction 1074 and a direction 1076 through the first speaker 231. The processor 210 may emit a second audio signal having a second phase distinct from the first phase in a direction 1075 through the second speaker 232. For example, the first phase may be opposite to the second phase. When the first phase is opposite to the second phase, the first audio signal emitted through the direction 1074 and the second audio signal emitted through the direction 1075 may be offset from each other. The first audio signal emitted through the direction 1076 may be better recognized by the user of the electronic device 200.

For example, the processor 210 may identify that a designated application (e.g., a phone application) is executed in the state 1092. Based on identifying that the designated application is executed, the processor 210 may output a first audio signal and a second audio signal having a phase distinct from the phase of the first audio signal. As an example, only when a user of the electronic device 200 is on a call, the processor 210 may output the first audio signal and the second audio signal having a phase distinct from the phase of the first audio signal. According to an embodiment, the processor 210 may identify that another application distinct from the designated application is being executed in the state 1092. The processor 210 may output the first audio signal and the second audio signal having a phase corresponding to the phase of the first audio signal based on identifying that the other application distinct from the designated application is being executed.

Referring to FIG. 10B, the first speaker 231 may perform both a speaker function and a receiver function. The second speaker 232 may perform both a speaker function and a receiver function. The first speaker 231 may be disposed in the first housing 1010 to emit a first audio signal through the opening 1001 and the opening 1003. The second speaker 232 may be disposed in the third housing 1030 to emit a second audio signal through the opening 1002 and the opening 1004.

The state 1093 may be referred to as an unfolded state. In the state 1093, the distance between the first speaker 231 and the second speaker 232 may be greater than or equal to the designated distance. The state 1093 may be an example of the second state described with reference to FIG. 4.

In the state 1093, the first speaker 231 may emit the first audio signal in a direction 1041 through the opening 1001. The first speaker 231 may emit the first audio signal in a direction 1043 through the opening 1003. The second speaker 232 may emit the second audio signal in a direction 1042 through the opening 1002. The second speaker 232 may emit the second audio signal in a direction 1044 through the opening 1004.

A state 1094 may be referred to as an outfolded state. In the state 1094, the distance between the first speaker 231 and the second speaker 232 may be less than the designated distance. The state 1094 may be an example of the first state described with reference to FIG. 4.

In the state 1094, the processor 210 may identify a state of the electronic device 200 as the first state. The processor 210 may determine a speaker to perform a function of a main speaker, based on identifying the state of the electronic device 200 as the first state. The processor 210 may determine a speaker to perform a function of the main speaker based on a state in which the electronic device 200 is gripped. For example, the processor 210 may determine a speaker to perform the function of the main speaker, based on identifying a housing of the electronic device 200 in which a part of the user's body is in contact, by using a proximity sensor.

For example, the processor 210 may emit a first audio signal having a normal phase in a direction 1045 and a direction 1047 through the first speaker 231, based on that the speaker to perform the function of the main speaker is determined to the first speaker 231. The processor 210 may emit a second audio signal having a phase opposite to the normal phase in a direction 1046 and a direction 1048 through the second speaker 232. The processor 210 may emit a second audio signal having a phase substantially opposite to the normal phase in the direction 1046 and the direction 1048 through the second speaker 232.

For example, based on determining that the speaker to perform the function of the main speaker is the second speaker 232, the processor 210 may emit a second audio signal having a normal phase in the direction 1046 and the direction 1048 through the second speaker 232. The processor 210 may emit a first audio signal having a phase opposite to the normal phase in the direction 1045 and the direction 1047 through the first speaker 231. The processor 210 may emit a first audio signal having a phase substantially opposite to the normal phase in the direction 1045 and the direction 1047 through the first speaker 231.

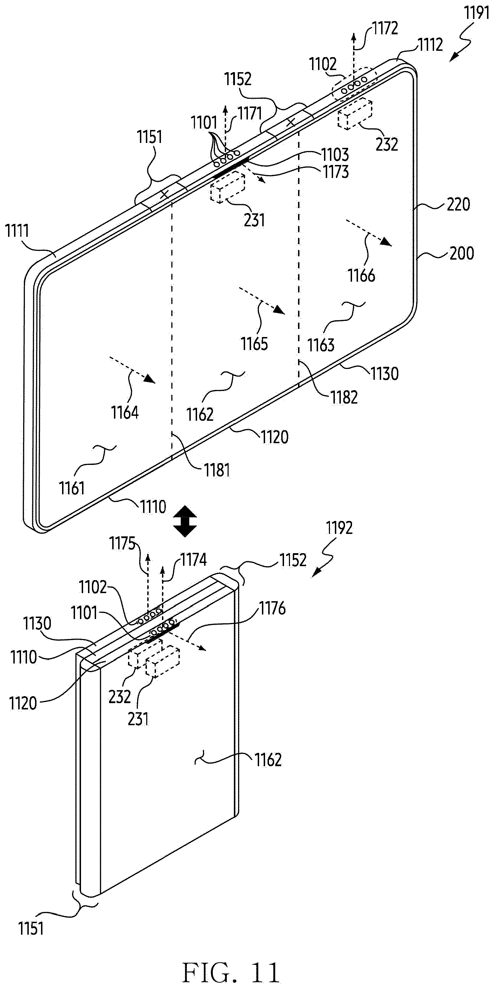

FIG. 11 illustrates an example of an electronic device including one or more speakers according to an embodiment.

Referring to FIG. 11, an electronic device 200 may include a first housing 1110, a second housing 1120, a third housing 1130, a first hinge structure 1151, and a second hinge structure 1152. The electronic device 200 may have a shape capable of being folded with respect to two axes based on the first hinge structure 1151 and the second hinge structure 1152. For example, the electronic device 200 may be referred to as a multi-foldable device that provides an outfolded state and an unfolded state.

The electronic device 200 may be a foldable device that is folded along a first axis 1181 and a second folding 1182. The first hinge structure 1151 may rotatably couple the first housing 1110 and the second housing 1120 with respect to the first folding axis 1181. The second hinge structure 1152 may rotatably couple the second housing 1120 and the third housing 1130 with respect to the second folding axis 1182.

A display 220 (e.g., a flexible display) may be divided into a first display area 1161, a second display area 1162, and a third display area 1163 based on the first and second folding axes 1181 and 1182. The first display area 1161 may correspond to a surface of the first housing 1110. The second display area 1162 may correspond to a surface of the second housing 1120. The third display area 1163 may correspond to a surface of the third housing 1130.

For example, in the unfolded state (e.g., a state 1191 of FIG. 11), a direction 1164 toward which the first display area 1161 faces, a direction 1165 toward which the second display area 1162 faces, and a direction 1166 toward which the third display area 1163 faces may be the same. The first display area 1161, the second display area 1162, and the third display area 1163 may form a single plane.

For example, in the outfolded state (e.g., a state 1192 of FIG. 11), the direction 1164 toward which the first display area 1161 faces and the direction 1165 to which the second display area 1162 face may be set to be opposite to each other. In the outfolded state, the direction 1165 toward which the second display area 1162 faces and the direction 1166 toward which the third display area 1163 faces may be opposite directions. When the state of the electronic device 200 changes from the unfolded state to the outfolded state, the first housing 1110 may be rotated with respect to the second housing 1120, and the third housing 1130 may be rotated with respect to the second housing 1120. As the first housing 1110 is rotated with respect to the second housing 1120, the first display area 1161 and the second display area 1162 may be folded to face the outside.

After the first housing 1110 is rotated with respect to the second housing 1120, as the third housing 1130 is rotated with respect to the second housing 1120, the first display area 1161 may be covered by the third housing 1130. After the first housing 1110 is rotated with respect to the second housing 1120, as the third housing 1130 is rotated with respect to the second housing 1120, the third display area 1163 may be folded to face the outside. The first display area 1161 may be in contact with a surface opposite to the third display area 1163.

For example, in the outfolded state (e.g., the state 1192 of FIG. 11), the second display area 1162 and the third display area 1163 may be exposed to the outside. The second display area 1162 and the third display area 1163 may function as a portion of the exterior of the electronic device 200.

According to an embodiment, the first speaker 231 may be disposed in the second housing 1120 to emit the first audio signal through the opening 1101 and the opening 1103. The second speaker 232 may be disposed in the third housing 1130 to emit the second audio signal through the opening 1102.

A state 1191 may be referred to as the unfolded state. In the state 1191, the distance between the first speaker 231 and the second speaker 232 may be greater than or equal to the designated distance. The state 1191 may be an example of the second state described with reference to FIG. 4.

In the state 1191, the first speaker 231 may emit a first audio signal in a direction 1171 through the opening 1101. The first speaker 231 may emit the first audio signal in a direction 1173 through the opening 1103. The second speaker 232 may emit a second audio signal in a direction 1172 through the opening 1102.

A state 1192 may be referred to as the outfolded state. In the state 1192, the distance between the first speaker 231 and the second speaker 232 may be less than the designated distance. The state 1192 may be an example of the first state described with reference to FIG. 4.

In the state 1192, the processor 210 may identify a state of the electronic device 200 as the first state. Based on identifying the state of the electronic device 200 as the first state, the processor 210 may output a first audio signal and a second audio signal having a phase distinct from the phase of the first audio signal. The processor 210 may emit a first audio signal having a first phase in a direction 1174 and a direction 1176 through the first speaker 231. The processor 210 may emit a second audio signal having a second phase distinct from the first phase in a direction 1175 through the second speaker 232. For example, the first phase may be opposite to the second phase. When the first phase is opposite to the second phase, the first audio signal emitted through the direction 1174 and the second audio signal emitted through the direction 1175 may be offset from each other. The first audio signal emitted through the direction 1176 may be better recognized by the user of the electronic device 200.

For example, the processor 210 may identify that a designated application (e.g., a phone application) is executed in the state 1192. Based on identifying that the designated application is executed, the processor 210 may output a first audio signal and a second audio signal having a phase distinct from the phase of the first audio signal. As an example, only when a user of the electronic device 200 is on a call, the processor 210 may output the first audio signal and the second audio signal having a phase distinct from the phase of the first audio signal. According to an embodiment, the processor 210 may identify that another application distinct from the designated application is executed, in the state 1192. The processor 210 may output the first audio signal and the second audio signal having a phase corresponding to the phase of the first audio signal, based on identifying that the other application distinct from the designated application is executed.

According to an embodiment, an electronic device (e.g., the electronic device 200) may comprise a first speaker (e.g., the first speaker 231) for outputting a first audio signal, a second speaker (e.g., the second speaker 232) for outputting a second audio signal, and a processor (e.g., the processor 210) operably coupled with the first speaker and the second speaker. The processor may be configured to, in case that the electronic device is in a first state in which a distance between the first speaker and the second speaker is less than a designated distance, output, through the first speaker, the first audio signal and output, through the second speaker, the second audio signal to have a phase distinct from a phase of the first audio signal. The processor may be configured to, in case that the electronic device is in a second state in which the distance between the first speaker and the second speaker is greater than or equal to the designated distance, output, through the first speaker, the first audio signal and output, through the second speaker, the second audio signal to have a phase corresponding to the phase of the first audio signal.

According to an embodiment, the processor may be configured to identify execution of a designated application while the state of the electronic device is the first state. The processor may be configured to output the first audio signal and the second audio signal having a phase distinct from the phase of the first audio signal, based on the execution of the designated application.

According to an embodiment, the electronic device may comprise a first housing (e.g., the first housing 510, the first housing 610), a second housing (e.g., the second housing 520, the second housing 620), a hinge structure rotatably coupling the first housing to the second housing with respect to a folding axis, and a flexible display (e.g., the display 220) including a first display area (e.g., the first display area 551, the first display area 651) corresponding to one surface of the first housing and a second display area (e.g., the second display area 552, the second display area 652) corresponding to one surface of the second housing divided based on the folding axis. The first speaker may be disposed in the first housing to emit the first audio signal through a first opening (e.g., the first opening 501, the first opening 601) formed on a first side surface of the first housing. The second speaker may be disposed in the second housing to emit the second audio signal through a second opening (e.g., the second opening 502, the second opening 602) formed on a second side surface of the second housing.

According to an embodiment, the first state (e.g., the state 591, the state 691) may comprise a state in which a first direction in which the first display area faces is opposite to a second direction in which the second display area faces. The second state (e.g., state 592, state 692) may comprise a state in which the first direction in which the first display area faces corresponds to the second direction in which the second display area faces.

According to an embodiment, the first opening may be formed to face the same direction as the second opening in the second state.

According to an embodiment, the first opening may be formed to face in a direction opposite to the direction in which the second opening faces in the second state.

According to an embodiment, a direction in which the first side surface faces may be perpendicular to a direction in which the first display area faces. The first housing may comprise a third opening through which the first audio signal is emitted in a direction opposite to the direction in which the first display area faces.

According to an embodiment, a direction in which the second side surface faces may be perpendicular to a direction in which the second display area faces. The second housing may be formed so that the second audio signal is not emitted in a direction opposite to the direction in which the second display area faces and the direction in which the second display area faces.

According to an embodiment, the electronic device may comprise a first housing (e.g., the first housing 710), a second housing (e.g., the second housing 730), a first hinge structure rotatably coupling the first housing to the second housing with respect to a first folding axis, a third housing, a second hinge structure rotatably coupling the second housing to the third housing with respect to a second folding axis, and a flexible display including a first display area corresponding to one surface of the first housing, a second display area corresponding to one surface of the second housing, and a third display area corresponding to one surface of the third housing divided based on the first folding axis and the second folding axis. The first speaker may be disposed in the first housing to emit the first audio signal through a first opening (e.g., the first opening 701) formed on a first side surface of the first housing. The second speaker may be disposed in the third housing to emit the second audio signal through a second opening (e.g., the second opening 702) formed on a second side surface of the third housing.

According to an embodiment, the first state may comprise an infolded state in which the second display area and the third display area face each other, and the first display area faces a surface of the third housing opposite to the third display area. The second state may comprise an unfolded state in which a direction in which the first display area faces, a direction in which the second display area faces, and a direction in which the third display area faces are set to be the same.

According to an embodiment, the first speaker may include a first sub-speaker configured to output a third audio signal in a first frequency band, and a second sub-speaker configured to output a fourth audio signal in a second frequency band distinct from the first frequency band. The second speaker may include a third sub-speaker configured to output a fifth audio signal in a third frequency band, and a fourth sub-speaker configured to output a sixth audio signal in a fourth frequency band. The first speaker and the third speaker may be substantially aligned along a direction perpendicular to the flexible display in the infolded state.

According to an embodiment, the first frequency band may be lower than the second frequency band. The third frequency band may be lower than the fourth frequency band.

According to an embodiment, the electronic device may comprise a third speaker configured to output a third audio signal through a third opening formed on a third side surface opposite to the first side surface of the first housing, and a fourth speaker configured to output a fourth audio signal through a fourth opening formed on a fourth side surface opposite to the second side surface of the third housing.

According to an embodiment, the processor may be configured to output the third audio signal corresponding to the first audio signal, and output the fourth audio signal corresponding to the second audio signal, based on identifying that a state of the electronic device is in the unfolded state.

According to an embodiment, the third audio signal may correspond to the first audio signal when the electronic device is in the unfolded state. The fourth audio signal may correspond to the second audio signal when the electronic device is in the unfolded state.

According to an embodiment, the processor may be configured to output the second audio signal corresponding to the first audio signal, and output the fourth audio signal corresponding to the third audio signal, based on identifying that a state of the electronic device is in the infolded state.

According to an embodiment, the second audio signal may correspond to the first audio signal when the electronic device is in the infolded state. According to an embodiment, the second audio signal may correspond to the first audio signal when the electronic device is in the infolded state.

According to an embodiment, the first audio signal and the third audio signal may be set to have the same phase within at least part frequency band with respect to the second audio signal and the fourth audio signal while the state of the electronic device is in the unfolded state.

According to an embodiment, the first audio signal and the second audio signal may be set to have the same phase within at least part frequency band with respect to the third audio signal and the fourth audio signal while the state of the electronic device is in the infolded state.

According to an embodiment, the first state may comprise an outfolded state in which the first display area and the second display area face each other and a surface of the second housing opposite to the second display area and a surface of the third housing opposite to the third display area face each other. The second state may comprise an unfolded state in which a direction in which the first display area faces, a direction in which the second display area faces, and a direction in which the third display area faces are set to be the same.

According to an embodiment, the electronic device may comprise a first housing, a second housing configured to movably engage with the first housing between a retracted position and an extended position, a flexible display coupled to the first housing and the second housing such that a size of a display area is changed as the second housing is moved between the retracted position and the extended position, and an actuator configured to move the second housing with respect to the first housing. The first speaker may be disposed in the first housing to emit the first audio signal through a first opening formed on a first side surface of the first housing. The second speaker may be disposed in the second housing to emit the second audio signal through a second opening formed on a second side surface of the second housing.

According to an embodiment, an electronic device (e.g., the electronic device 200) may comprise a first speaker (e.g., the first speaker 231) for outputting a first audio signal, a second speaker (e.g., the second speaker 232) for outputting a second audio signal, and a processor (e.g., the processor 210) operably coupled with the first speaker and the second speaker. The processor may be configured to identify the state of the electronic device as one of a first state in which a distance between the first speaker and the second speaker is less than a designated distance and a second state in which the distance between the first speaker and the second speaker is greater than or equal to the designated distance. The processor may be configured to output the first audio signal and the second audio signal having a phase distinct from the phase of the first audio signal, based on identifying the state of the electronic device as the first state. The processor may be configured to output the first audio signal and the second audio signal having a phase corresponding to the phase of the first audio signal, based on identifying the state of the electronic device as the second state.

According to an embodiment, a method performed by an electronic device may comprise, in case that the electronic device is in a first state in which a distance between a first speaker and a second speaker is less than a designated distance, outputting, through the first speaker, the first audio signal and outputting, through the second speaker, the second audio signal to have a phase distinct from a phase of the first audio signal. The method may comprise, in case that the electronic device is in a second state in which the distance between the first speaker and the second speaker is greater than or equal to the designated distance, outputting, through the first speaker, the first audio signal and outputting, through the second speaker, the second audio signal to have a phase corresponding to the phase of the first audio signal.

According to an embodiment, a method performed by an electronic device may comprise identifying the state of the electronic device as one of a first state in which a distance between the first speaker and the second speaker is less than a designated distance and a second state in which the distance between the first speaker and the second speaker is greater than or equal to the designated distance. The method may comprise outputting the first audio signal and the second audio signal having a phase distinct from the phase of the first audio signal, based on identifying the state of the electronic device as the first state. The method may comprise outputting the first audio signal and the second audio signal having a phase corresponding to the phase of the first audio signal, based on identifying the state of the electronic device as the second state.

According to an embodiment, an electronic device may comprise a first speaker for outputting a first audio signal, a second speaker for outputting a second audio signal, memory comprising one or more media, storing instructions, and at least one processor comprising processing circuitry. The instructions, when executed by the at least one processor individually or collectively, may cause the electronic device to, in case that the electronic device is in a first state in which a distance between the first speaker and the second speaker is less than a designated distance, output, through the first speaker, the first audio signal and output, through the second speaker, the second audio signal to have a phase distinct from a phase of the first audio signal, and in case that the electronic device is in a second state in which the distance between the first speaker and the second speaker is greater than or equal to the designated distance, output, through the first speaker, the first audio signal and output, through the second speaker, the second audio signal to have a phase corresponding to the phase of the first audio signal.

According to an embodiment, the instructions, when executed by the at least one processor individually or collectively, cause the electronic device to identify an execution of a designated application while the state of the electronic device is the first state, and in response to identifying the execution of the designated application, output the first audio signal and the second audio signal having a phase distinct from the phase of the first audio signal.

According to an embodiment, the instructions, when executed by the at least one processor individually or collectively, may cause the electronic device to, based on identifying that a state of the electronic device is in the unfolded state, output the seventh audio signal to have a phase corresponding to the phase of the first audio signal, and output the eighth audio signal to have a phase corresponding to the phase of the second audio signal.

According to an embodiment, the instructions, when executed by the at least one processor individually or collectively, may cause the electronic device to, based on identifying that a state of the electronic device is in the infolded state, output the second audio signal to have a phase corresponding to the phase of the first audio signal, and output the eighth audio signal to have a phase corresponding to the phase of the seventh audio signal.

According to an embodiment, an electronic device may comprise a first speaker for outputting a first audio signal, a second speaker for outputting a second audio signal, a processor operably coupled with the first speaker and the second speaker. The processor may be configured to control the first speaker to output the first audio signal, and control the second speaker to output the second audio signal. A phase of the second audio signal in relation to a phase of the first audio signal is dependent on a distance between the first speaker and the second speaker.

According to an embodiment, when the distance between the first speaker and the second speaker is less than a predetermined distance, the phase of the second audio signal is distinct from the phase of the first audio signal. When the distance between the first speaker and the second speaker is greater than or equal to the predetermined distance, the phase of the second audio signal corresponds to the phase of the first audio signal.

According to an embodiment, the electronic device may comprise a first housing, a second housing, a hinge structure rotatably coupling the first housing to the second housing with respect to a folding axis, and a flexible display including a first display area corresponding to one surface of the first housing and a second display area corresponding to one surface of the second housing divided based on the folding axis. The first speaker may be disposed in the first housing to emit the first audio signal through a first opening formed on a first side surface of the first housing. The second speaker may be disposed in the second housing to emit the second audio signal through a second opening formed on a second side surface of the second housing.

According to an embodiment, in the first state, a first direction in which the first display area faces may be opposite to a second direction in which the second display area faces. In the second state, the first direction in which the first display area faces may correspond to the second direction in which the second display area faces.

According to an embodiment, when the electronic device is in the second state, the first opening may face the same direction as the second opening.

According to an embodiment, when the electronic device is in the second state, the first opening may face in a direction opposite to the direction in which the second opening faces.

According to an embodiment, a direction in which the first side surface faces may be perpendicular to the first direction in which the first display area faces. The first housing may comprise a third opening through which the first audio signal is emitted in a direction opposite to the first direction in which the first display area faces.

According to an embodiment, a direction in which the second side surface faces may be perpendicular to a second direction in which the second display area faces. The second housing may be formed so that the second audio signal is not emitted in a direction opposite to the second direction in which the second display area faces.

According to an embodiment, the electronic device may comprise a first housing, a second housing, a first hinge structure rotatably coupling the first housing to the second housing with respect to a first folding axis, a third housing, a second hinge structure rotatably coupling the second housing to the third housing with respect to a second folding axis, and a flexible display including a first display area corresponding to a first surface of the first housing, a second display area corresponding to a first surface of the second housing, and a third display area corresponding to a first surface of the third housing divided based on the first folding axis and the second folding axis. The first speaker may be disposed in the first housing to emit the first audio signal through a first opening formed on a first side surface of the first housing. The second speaker may be disposed in the third housing to emit the second audio signal through a second opening formed on a second side surface of the third housing.

According to an embodiment, the first state may comprise a folded state in which the second display area and the third display area face each other, and the first display area faces a surface of the third housing opposite to the third display area. The second state may comprise an unfolded state in which a direction in which the first display area faces, a direction in which the second display area faces, and a direction in which the third display area faces are the same.

According to an embodiment, the first speaker may include a first sub-speaker configured to output a third audio signal in a first frequency band, and a second sub-speaker configured to output a fourth audio signal in a second frequency band distinct from the first frequency band. The second speaker may include a third sub-speaker configured to output a fifth audio signal in a third frequency band, and a fourth sub-speaker configured to output a sixth audio signal in a fourth frequency band. The first sub-speaker and the third sub-speaker may be substantially aligned along a direction perpendicular to the flexible display in the folded state.

According to an embodiment, he first frequency band may be lower than the second frequency band. The third frequency band may be lower than the fourth frequency band.

According to an embodiment, the electronic device further may comprise a third speaker configured to output a seventh audio signal through a third opening formed on a third side surface opposite to the first side surface of the first housing, and a fourth speaker configured to output an eighth audio signal through a fourth opening formed on a fourth side surface opposite to the second side surface of the third housing.

According to an embodiment, the processor may be configured to, based on identifying that a state of the electronic device is in the unfolded state, output the seventh audio signal to have a phase corresponding to the phase of the first audio signal, and output the eighth audio signal to have a phase corresponding to the phase of the second audio signal.

According to an embodiment, the processor may be configured to, based on identifying that a state of the electronic device is in the folded state, output the second audio signal to have a phase corresponding to the phase of the first audio signal, and output the eighth audio signal to have a phase corresponding to the phase of the seventh audio signal.

According to an embodiment, the first audio signal and the seventh audio signal are set to have the same phase within at least a part of a frequency band with respect to the second audio signal and the eighth audio signal while the state of the electronic device is in the unfolded state.

According to an embodiment, the first audio signal and the second audio signal are set to have the same phase within at least a part of a frequency band with respect to the seventh audio signal and the eighth audio signal while the state of the electronic device is in the folded state.

According to an embodiment, the first state may comprise a folded-out state in which the first display area and the second display area face each other and a surface of the second housing opposite to the second display area and a surface of the third housing opposite to the third display area face each other. The second state may comprise an unfolded state in which a direction in which the first display area faces, a direction in which the second display area faces, and a direction in which the third display area faces are the same.

According to an embodiment, the electronic device may comprise a first housing, a second housing configured to movably engage with the first housing between a retracted position and an extended position, a flexible display coupled to the first housing and the second housing such that a size of a display area is changed as the second housing is moved between the retracted position and the extended position, and an actuator configured to move the second housing with respect to the first housing. The first speaker may be disposed in the first housing to emit the first audio signal through a first opening formed on a first side surface of the first housing. The second speaker may be disposed in the second housing to emit the second audio signal through a second opening formed on a second side surface of the second housing.

According to an embodiment, a method performed by an electronic device, may comprise controlling a first speaker of the electronic device to output a first audio signal and, controlling a second speaker of the electronic device to output a second audio signal. A phase of the second audio signal in relation to a phase of the first audio signal is dependent on a distance between the first speaker and the second speaker.

According to an embodiment, when the distance between the first speaker and the second speaker is less than a predetermined distance, the phase of the second audio signal may be distinct from the phase of the first audio signal. When the distance between the first speaker and the second speaker is greater than or equal to the predetermined distance, the phase of the second audio signal may correspond to the phase of the first audio signal.

According to the above-described embodiment, one or more speakers of a foldable device and/or a rollable device may be controlled. When a distance between a first speaker and a second speaker is minimal, phone performance and multimedia performance may be maximized. The first speaker may be set to perform a speaker function and a receiver function, and the second speaker may be set to perform only a speaker function.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device comprising:
a first speaker for outputting a first audio signal;
a second speaker for outputting a second audio signal;
memory comprising one or more media, storing instructions; and
at least one processor comprising processing circuitry;
wherein the instructions, when executed by the at least one processor individually or collectively, cause the electronic device to:
in case that the electronic device is in a first state in which a distance between the first speaker and the second speaker is less than a designated distance, output, through the first speaker, the first audio signal and output, through the second speaker, the second audio signal to have a phase distinct from a phase of the first audio signal, and
in case that the electronic device is in a second state in which the distance between the first speaker and the second speaker is greater than or equal to the designated distance, output, through the first speaker, the first audio signal and output, through the second speaker, the second audio signal to have a phase corresponding to the phase of the first audio signal.

2. The electronic device of claim 1, wherein the instructions, when executed by the at least one processor individually or collectively, cause the electronic device to:
identify an execution of a designated application while the state of the electronic device is the first state, and
in response to identifying the execution of the designated application, output the first audio signal and the second audio signal having a phase distinct from the phase of the first audio signal.

3. The electronic device of claim 1 or claim 2, wherein the electronic device further comprises:
a first housing;
a second housing;
a hinge structure rotatably coupling the first housing to the second housing with respect to a folding axis; and
a flexible display including a first display area corresponding to one surface of the first housing and a second display area corresponding to one surface of the second housing divided based on the folding axis,
wherein the first speaker is disposed in the first housing to emit the first audio signal through a first opening formed on a first side surface of the first housing, and
wherein the second speaker is disposed in the second housing to emit the second audio signal through a second opening formed on a second side surface of the second housing.

4. The electronic device of claim 3, wherein, in the first state, a first direction in which the first display area faces is opposite to a second direction in which the second display area faces, and
wherein, in the second state, the first direction in which the first display area faces corresponds to the second direction in which the second display area faces.

5. The electronic device of claim 3 or claim 4, wherein, when the electronic device is in the second state, the first opening faces the same direction as the second opening.

6. The electronic device of claim 3 or claim 4, wherein, when the electronic device is in the second state, the first opening is formed to face in a direction opposite to the direction in which the second opening faces.

7. The electronic device of any of claim 3 to claim 6, wherein a direction in which the first side surface faces is perpendicular to the first direction in which the first display area faces, and
wherein the first housing further comprises a third opening through which the first audio signal is emitted in a direction opposite to the first direction in which the first display area faces.

8. The electronic device of any of claim 3 to claim 7, wherein a direction in which the second side surface faces is perpendicular to the second direction in which the second display area faces, and
wherein the second housing is formed so that the second audio signal is not emitted in a direction opposite to the second direction in which the second display area faces.

9. The electronic device of claim 1 or claim 2, wherein the electronic device further comprises:
a first housing;
a second housing;
a first hinge structure rotatably coupling the first housing to the second housing with respect to a first folding axis;
a third housing;
a second hinge structure rotatably coupling the second housing to the third housing with respect to a second folding axis; and
a flexible display including a first display area corresponding to one surface of the first housing, a second display area corresponding to one surface of the second housing, and a third display area corresponding to one surface of the third housing divided based on the first folding axis and the second folding axis,
wherein the first speaker is disposed in the first housing to emit the first audio signal through a first opening formed on a first side surface of the first housing, and
wherein the second speaker is disposed in the third housing to emit the second audio signal through a second opening formed on a second side surface of the third housing.

10. The electronic device of claim 9, wherein the first state comprises an infolded state in which the second display area and the third display area face each other, and the first display area faces a surface of the third housing opposite to the third display area, and
wherein the second state comprises an unfolded state in which a direction in which the first display area faces, a direction in which the second display area faces, and a direction in which the third display area faces are the same.

11. The electronic device of claim 9 or claim 10, wherein the first speaker includes:
a first sub-speaker configured to output a third audio signal in a first frequency band; and
a second sub-speaker configured to output a fourth audio signal in a second frequency band distinct from the first frequency band,
wherein the second speaker includes:
a third sub-speaker configured to output a fifth audio signal in a third frequency band; and
a fourth sub-speaker configured to output a sixth audio signal in a fourth frequency band, and
wherein the first sub-speaker and the third sub-speaker are substantially aligned along a direction perpendicular to the flexible display in the infolded state.

12. The electronic device of claim 11, wherein the first frequency band is lower than the second frequency band, and
wherein the third frequency band is lower than the fourth frequency band.

13. The electronic device of any one of claims 9 to 12, wherein the electronic device further comprises:
a third speaker configured to output a seventh audio signal through a third opening formed on a third side surface opposite to the first side surface of the first housing; and
a fourth speaker configured to output a eighth audio signal through a fourth opening formed on a fourth side surface opposite to the second side surface of the third housing.

14. The electronic device of claim 13, wherein the instructions, when executed by the at least one processor individually or collectively, cause the electronic device to:
based on identifying that a state of the electronic device is in the unfolded state:
output the seventh audio signal to have a phase corresponding to the phase of the first audio signal, and
output the eighth audio signal to have a phase corresponding to the phase of the second audio signal.

15. A method performed by an electronic device, the method comprising:
in case that the electronic device is in a first state in which a distance between a first speaker and a second speaker is less than a predetermined distance, outputting, through the first speaker, the first audio signal and outputting, through the second speaker, the second audio signal to have a phase distinct from a phase of the first audio signal, and
in case that the electronic device is in a second state in which the distance between the first speaker and the second speaker is greater than or equal to the predetermined distance, outputting, through the first speaker, the first audio signal and outputting, through the second speaker, the second audio signal to have a phase corresponding to the phase of the first audio signal.
